(19) Europäisches Patentamt / European Patent Office / Office européen des brevets

(11) **EP 2 951 014 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **14701587.9**

(22) Anmeldetag: **29.01.2014**

(51) Int Cl.:
**B32B 27/08** *(2006.01)*    **E04D 12/00** *(2006.01)*
**E04B 1/62** *(2006.01)*    **B32B 7/02** *(2006.01)*

(86) Internationale Anmeldenummer:
**PCT/EP2014/051732**

(87) Internationale Veröffentlichungsnummer:
**WO 2014/118241 (07.08.2014 Gazette 2014/32)**

(54) **FEUCHTEVARIABLE GERICHTETE DAMPFBREMSE**

HUMIDITY ADAPTIVE VAPOUR RETARDER

BARRIÈRE PARE-VAPEUR ORIENTÉE VARIABLE SELON L'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2013 EP 13153018**

(43) Veröffentlichungstag der Anmeldung:
**09.12.2015 Patentblatt 2015/50**

(73) Patentinhaber: **Silu Verwaltung AG**
**6045 Meggen (CH)**

(72) Erfinder:
• **SIEBER, Marco**
**CH-6048 Horw (CH)**
• **SIEBER, Reto**
**CH-6004 Luzern (CH)**

(74) Vertreter: **Lang, Johannes et al**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A1- 1 650 022**    **EP-A1- 2 554 758**
**WO-A2-01/23125**    **DE-A1- 19 902 102**
**DE-U1- 20 214 762**    **US-A1- 2007 015 424**
**US-A1- 2010 203 790**

**Beschreibung**

Die vorliegende Erfindung betrifft eine feuchtevariable gerichtete Dampfbremse, ihre Verwendung zur Abdichtung von Gebäuden sowie ein diese Dampfbremse umfassendes System. Die Erfindung betrifft auch die Verwendung einer Folie zum Abdichten eines durch eine Außenhaut geschlossenen Raumes in Gebäuden.

Dampfbremsen werden üblicherweise in Dachkonstruktionen von Gebäuden eingesetzt, um die Diffusion von Wasserdampf in die Konstruktion zu kontrollieren. Sie sollen das Eindringen von Feuchte in Dämmschichten verhindern, aber gleichzeitig ein Austrocknen von Gebäuden zulassen. Daneben sollen sie die Aufgaben einer Luftdichtschicht übernehmen. Eine Dampfbremse hat auch die Funktion, das Eindringen von Feuchte in die Tragkonstruktion aus zum Beispiel Holz oder Metall zu verhindern.

Ein Maß für den Widerstand, den eine Bauteilschicht der Wasserdampfdiffusion entgegensetzt, ist der $s_d$-Wert, der als wasserdampfdiffusionsäquivalente Luftschichtdicke definiert ist und das Produkt aus Wasserdampfdiffusionswiderstandszahl und Dicke der Schicht darstellt. Je höher der $s_d$-Wert liegt, desto größer ist der Widerstand. Ein $s_d$-Wert von 2 m bedeutet, dass die Schicht der Wasserdampfdiffusion einen identischen Widerstand entgegensetzt wie eine 2 m dicke Luftschicht. Entsprechend bedeutet ein $s_d$-Wert von 10 m, dass der Widerstand der Schicht einer 10 m dicken Luftschicht entspricht. Die Wasserdampfdiffusion durch eine Schicht mit einem $s_d$-Wert von 10 m ist somit langsamer als bei einer Schicht mit einem $s_d$-Wert von 2 m.

Aus dem Stand der Technik sind unterschiedliche Dampfbremsen bekannt. DE 101 11 319 A1 betrifft eine Dampfbremse aus einem Material, das einen von der Umgebungsfeuchtigkeit abhängigen $s_d$-Wert aufweist, dergestalt, dass bei einer relativen Feuchte im Bereich von 20 bis 60 % oder von 30% bis 50% der $s_d$-Wert 5-10 m und bei einer relativen Feuchte im Bereich von 50 bis 95 % der $s_d$-Wert < 2 m oder < 1 m beträgt. Das Material kann Polyethylen oder Polypropylen sein, das als polaren Bestandteil Acrylsäure enthält. Aus der EP 1 372 956 B1 ist die Verwendung von Ionomeren in Dampfbremsen bekannt. DE 198 57 483 A1 beschreibt dreischichtige Dachunterspannbahnen, wobei die mittlere Schicht als Klebeschicht ausgebildet ist und einen von der Umgebungsfeuchtigkeit abhängigen $s_d$-Wert aufweist. DE 199 02 102 A1 betrifft einen Verbundwerkstoff aus mindestens drei Schichten, der neben einer Luftdichtungsfunktion die Aufgabe hat, Schad- oder Giftstoffe zurückzuhalten.

DE 199 44 819 A1 offenbart Dampfbremsen, bei denen ein dünner Film auf ein Vlies aufgebracht ist und die Wasserdampfdurchlässigkeit von der Filmseite her größer ist als von der Vliesseite.

Aus dem Gebrauchsmuster AT 009 694 U2 ist eine Dampfbremse bekannt, deren Wasserdampfdiffusionswiderstand richtungsabhängig ist und die mindestens drei Schichten umfasst, davon zwei unterschiedlich wasserdampfsperrende Außenschichten und eine mittlere feuchtigkeitsspeichernde Schicht.

EP 0 821 755 A1 offenbart eine Dampfbremse, deren Wasserdampfdiffusionswiderstand von der Umgebungsfeuchtigkeit abhängt, dergestalt, dass bei einer relativen Umgebungsfeuchte von 30 % bis 50 % der $s_d$-Wert 2-5 m und bei einer relativen Umgebungsfeuchte von 60 % bis 80 % der $s_d$-Wert < 1 m beträgt. Damit soll im Sommer, wenn die Umgebungsfeuchte in der Regel höher ist, der Diffusionswiderstand geringer sein, um die Austrocknung der Isolierung zu fördern, während im Winter bei in der Regel niedrigerer Feuchte der Diffusionswiderstand höher ist. Als feuchtevariables Material wird Polyamid offenbart.

DE 202 14 762 U1 betrifft eine asymmetrische Kunststoffmembran aus zwei Schichten, wobei die Kunststoffe der beiden Schichten unterschiedlichen Wasserdampfdiffusionswiderstand aufweisen und wobei die erste Schicht einen von der Umgebungsfeuchte abhängigen Wasserdampfdiffusionswiderstand aufweist. Die US 2007/0015424 A1 betrifft Laminate, bei denen ein Baumaterial mit einer Dampfbremse mit feuchtevariabler Eigenschaft verklebt ist, wobei die Dampfbremse Ethylen-Vinylalkohol (EVOH) enthält. Die US 2010/0203790 A1 beschreibt Mehrschichtfilme, die in der genannten Reihenfolge eine selektiv permeable Außenschicht, eine Feuchtigkeitsbarrieremembran mit Nanoton, eine Kleberschicht und ein Fasersubstrat auf der Kleberschicht umfassen.

Die nachveröffentlichte EP 2 554 758 A1 offenbart eine Dampfbremse mit einer ersten Schicht mit einem $s_d$-Wert von 2 bis 5 m bei einer relativen Umgebungsfeuchte von 30 % bis 50 % und einem $s_d$-Wert < 1 m bei einer relativen Feuchte von 60 % bis 80 % sowie einer zweiten Schicht mit einem $s_d$-Wert > 0,2 m bei einer relativen Feuchte von 80 % bis 100 %.

Bei den Dampfbremsen aus Polyamid tritt das Problem auf, dass in Räumen mit hoher Feuchtigkeit, wie Bad oder Küche, auch im Winter eine hohe Wasserdampfdiffusion stattfindet, was zu Kondensation von Wasser in der Dachisolierung und / oder in der Außenwanddämmung und damit zu Bauschäden führen kann. Ebenso kann eine Kondensation von Wasser in der Dachkonstruktion auftreten.

Aufgabe der vorliegenden Erfindung war es, dieses Problem unter Beibehaltung der gewünschten Eigenschaften einer Dampfbremse zu beheben.

Zur Lösung dieser Aufgabe wird erfindungsgemäß eine Dampfbremse aus mindestens zwei Schichten vorgeschlagen, wobei eine Schicht feuchtevariabel ist und die andere Schicht im Wesentlichen nicht feuchtevariabel ist.

Außerdem wird die Verwendung einer richtungssensitiven Folie mit Schichten unterschiedlicher Feuchtevariabilität zur Abdichtung von Gebäudekonstruktionen vorgeschlagen.

Somit betrifft die Erfindung eine Dampfbremse gemäß Patentanspruch 19, die mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteunabhängig ist, bevorzugt feuchteunabhängig ist, und der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist. Bevorzugt weisen die zwei Schichten zusammen (Schicht 1 und Schicht 2) eine Dicke von 35 bis 550 $\mu$m auf. Liegen weitere Schichten vor, beträgt die Gesamtdicke der Dampfbremse vorzugsweise nicht mehr als 700 $\mu$m.

Daneben betrifft die Erfindung die Verwendung der Dampfbremse zur Abdichtung von Gebäudehüllen sowie ein System, das die Dampfbremse und ein Bauteil oder Material, das im Baubereich in der Gebäudehülle abzudichten ist, umfasst.

Weiterhin betrifft die Erfindung gemäß Patentanspruch 1 die Verwendung einer Folie zum Abdichten eines durch eine Außenhaut geschlossenen Raumes in Gebäuden, wobei die Folie eine Folienseite X und eine gegenüberliegende Folienseite Y aufweist und die Folie so angeordnet wird, dass die Folienseite X zur Außenhaut ausgerichtet ist, wobei die Folienseiten X und Y derart definiert sind, dass die Wasserdampfdiffusion von der Folienseite X zur Folienseite Y grösser ist als die Wasserdampfdiffusion von der Folienseite Y zur Folienseite X, mit der Maßgabe, dass die Folienseite X bei dem Versuchsaufbau gemäss DIN EN ISO 12572:2001 Satz B (85% r.F. zu 0% r.F.; 23°C) zur Seite höherer relativer Luftfeuchtigkeit zeigt und sich dabei eine größere Wasserdampfdiffusion messen lässt, als wenn bei gleicher Messung die Folienseite Y zur Seite höherer relativer Luftfeuchtigkeit zeigt.

Darüber hinaus betrifft die Erfindung gemäß Patentanspruch 2 die Verwendung einer Folie zum Abdichten eines durch eine Außenhaut geschlossenen Raumes in Gebäuden, wobei die Folie mindestens zwei Schichten umfasst, wobei eine Schicht (Schicht 1) feuchte-variabel ist und der Quotient für den Wasserdampfdiffusionswiderstand von dem $s_d$-Wert dieser Einzelschicht bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteinvariabel ist und der Quotient von dem $s_d$-Wert dieser Einzelschicht bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist, wobei die Folie so angeordnet wird, dass die Schicht 1 zur Außenhaut ausgerichtet ist.

Die Folie wird innerhalb des geschlossenen Raumes angeordnet. In einer bevorzugten Ausführungsform ist die Schicht 1 der Folie zur Folienseite X ausgerichtet oder die Außenseite der Schicht 1 bildet die Folienseite X. In einer hierin beschriebenen Ausführungsform wird die Folie außerhalb des geschlossenen Raumes angeordnet. In einer bevorzugten Ausgestaltung der Erfindung ist die Folie eine Dampfbremse. In einer anderen bevorzugten Ausgestaltung der Erfindung wird die Außenhaut durch Wandkonstruktionen, Bodenkonstruktionen und/oder Deckenkonstruktionen in Gebäuden gebildet.

Zudem betrifft die Erfindung ein Verfahren zur Abdichtung eines durch eine Außenhaut geschlossenen Raumes in Gebäuden unter Verwendung einer Folie, sowie ein System, das die Folie und die Außenhaut umfasst.

Bevorzugte Ausführungsformen und Ausgestaltungen der Erfindung sind in der nachfolgenden Beschreibung, den Ansprüchen und Figuren definiert.

Die Figuren zeigen:

Figur 1 zeigt einen Versuchsaufbau zur Messung der Richtungssensitivität einer Dampfbremse;
Figur 2 zeigt das Funktionsprinzip einer erfindungsgemäß verwendeten Folie mit den Folienseiten X und Y;
Figur 3(a) zeigt schematisch ein Haus als Außenhaut mit Anbringungsmöglichkeiten für die Folie;
Figur 3(b) entspricht Figur 3(a), wobei zusätzlich die Anbringung der Folie in den, in den Figuren 4 bis 25 gezeigten Fällen veranschaulicht ist;
Figuren 4, 5, 6(a), 6(b), 7 bis 9 zeigen bevorzugte Ausführungsformen für die Verwendung der Folie in einem Steildach;
Figuren 10 bis 15 zeigen bevorzugte Ausführungsformen für die Verwendung der Folie in einem Flachdach;
Figuren 16 bis 18 zeigen bevorzugte Ausführungsformen für die Verwendung der Folie in einer Wandkonstruktion;
Figur 19 zeigt die Verwendung der Folie in einer Wandkonstruktion, wobei diese Konstruktion in einer Klimazone mit hoher Umgebungsfeuchte Anwendung findet;
Figuren 20 und 21 zeigen bevorzugte Ausführungsformen für die Verwendung der Folie in einem Dachboden;
Figuren 22 und 23 zeigen bevorzugte Ausführungsformen für die Verwendung der Folie in einer Kellerdecke;
Figur 24 zeigt eine bevorzugte Ausführungsform für die Verwendung der Folie an einer Außenwand, die vom Keller zum Erdreich zeigt.
Figur 25 zeigt eine bevorzugte Ausführungsform für die Verwendung der Folie an einer Außenwand, die zur Garage zeigt.

Erfindungsgemäss umfasst die Dampfbremse mindestens zwei Schichten (Schicht 1 und Schicht 2). Eine der beiden Schichten, die Schicht 1, ist feuchtevariabel. Dies bedeutet, dass sie einen von der relativen Luftfeuchtigkeit abhängigen $s_d$-Wert zeigt. Die andere Schicht, Schicht 2, ist feuchteunabhängig oder im Wesentlichen feuchteunabhängig, also nicht-feuchtevariabel. Dies bedeutet, dass sie einen von der relativen Luftfeuchtigkeit unabhängigen $s_d$-Wert oder im Wesentlichen unabhängigen $s_d$-Wert zeigt.

Vorliegend bezieht sich der $s_d$-Wert auf eine Bestimmung gemäss DIN EN ISO 12572:2001 mit dem Messgerät GINTRONIC GraviTest 6300 nach der Dry Cup / Wet Cup Methode. Bei dieser Methode werden $s_d$-Werte bei 23 °C im Trockenbereich (0% zu 50 % relative Luftfeuchtigkeit; DIN EN ISO 12572:2001 Satz A / Dry Cup, 25% mittlere relative Luftfeuchtigkeit), (0% zu 85 % relative Luftfeuchtigkeit; DIN EN ISO 12572:2001 Satz B / Dry Cup, 42.5% mittlere relative Luftfeuchtigkeit) und im Feuchtbereich (50% zu 93 % relative Luftfeuchtigkeit; DIN EN ISO 12572:2001 Satz C / Wet Cup, 71.5% mittlere relative Luftfeuchtigkeit) bestimmt. Die Messung erfolgt mittels eines Prüfgefäßes analog DIN EN ISO 12572:2001 Anhang C. Das Prüfgefäß wird durch den Probenkörper, die erfindungsgemässe Dampfbremse, verschlossen. Innerhalb des Prüfgefäßes wird das gewünschte Klima durch die Verwendung von Trockenmittel oder Salzlösungen eingestellt. Das Gegenklima außerhalb des Prüfgefäßes wird mittels Klimakammer realisiert. Somit bedeutet 25 % mittlere relative Luftfeuchtigkeit, dass bei der Messung an der jeweiligen Schicht auf einer Seite eine relative Luftfeuchtigkeit von 0 % (vorzugsweise innerhalb des Prüfgefäßes) und auf der anderen Seite eine relative Luftfeuchtigkeit von 50 % (vorzugsweise außerhalb des Prüfgefäßes in der Klimakammer) anliegt. Entsprechend sind bei 71.5% mittlerer relativer Luftfeuchtigkeit die relativen Luftfeuchtigkeiten 50 % und 93 % (beispielsweise kann eine relative Luftfeuchtigkeit von 93 % mittels einer gesättigten, wässrigen Ammoniumdihydrogenphosphat-Lösung ($(NH_4)H_2PO_4$) innerhalb des Prüfgefäßes realisiert werden). Für die Bestimmung einer mittleren relativen Luftfeuchtigkeit von 42.5% wird das Verfahren nach DIN EN ISO 12572:2001 Satz B angewendet. In der Klimakammer außerhalb des Prüfgefäßes wird eine relative Luftfeuchtigkeit von 85% verwendet und innerhalb des Prüfgefäßes wird mittels Trockenmittel eine ungefähre relative Luftfeuchtigkeit von 0% eingestellt.

Der $s_d$-Wert einer einzelnen Schicht wird durch die Wasserdampfdiffusionswiderstandszahl $\mu$ und die verwendete Schichtdicke definiert:

$$s_d\text{-Wert [m]} = \text{Wasserdampfdiffusionswiderstandszahl } \mu \text{ x Schichtdicke [m]}$$

Somit können definierte $s_d$-Werte einer Einzelschicht über Materialien oder Materialkombinationen erhalten werden, welche entweder eine hohe Wasserdampfdiffusionswiderstandszahl $\mu$ und eine geringe Schichtdicke oder eine niedrige Wasserdampfdiffusionswiderstandszahl $\mu$ und eine hohe Schichtdicke aufweisen.

Die Gesamtdicke der Schicht 1 und Schicht 2 liegt vorzugsweise im Bereich von 35 $\mu$m bis 550 $\mu$m, bevorzugt von 35 $\mu$m bis 475 $\mu$m, stärker bevorzugt von 55 $\mu$m bis 400 $\mu$m und am meisten bevorzugt von 80 $\mu$m bis 350 $\mu$m, jeweils bezogen auf die Schicht 1 und 2. In einer anderen bevorzugten Ausführungsform liegt die Gesamtdicke der Schicht 1 und Schicht 2 zwischen 75 $\mu$m und 550 $\mu$m Insbesondere bevorzugt ist ein Bereich von 90 $\mu$m bis 500 $\mu$m, stärker bevorzugt von 100 $\mu$m bis 350 $\mu$m. Dicken über 550 $\mu$m können für die Verarbeitung als Dampfbremse in Bahnenform zu Steifigkeitsproblemen führen, sind jedoch nicht ausgeschlossen.

Die Schicht 1 hat vorzugsweise eine Schichtdicke im Bereich von 10 $\mu$m bis 200 $\mu$m, bevorzugt von 20 $\mu$m bis 175 $\mu$m, stärker bevorzugt von 30 $\mu$m bis 150 $\mu$m und am bevorzugtesten von 40 $\mu$m bis 125 $\mu$m. In einer anderen bevorzugten Ausführungsform liegt die Dicke der Schicht 1 zwischen 50 $\mu$m und 200 $\mu$m. Insbesondere bevorzugt ist ein Bereich von 60 $\mu$m bis 150 $\mu$m.

Geeignete Materialien für die feuchtevariable Schicht 1 sind Polyamid, zum Beispiel Polyamid 6, Polyamid 66 und weitere Polyamid-Typen. Weiterhin sind Ionomere geeignet. Ionomere sind thermoplastische Kunststoffe, welche zumindest teilweise funktionelle Gruppen, wie Säuregruppen z.B. Sulfonsäure oder Acrylsäure, enthalten, oder bei welchen solche Gruppen in den Bausteinen der Polymerketten vorkommen können. Diese funktionellen Gruppen sind teilweise oder vollständig durch Alkali- oder Erdalkali-Ionen oder andere LewisSäuren, wie zum Beispiel Aluminium- oder Zink-Kationen, neutralisiert. Aus der EP 1 372 956 B1 ist die Verwendung von Ionomeren in Dampfbremsen bekannt. Für die Schicht 1 sind weiterhin Materialien möglich, welche basische funktionelle Gruppen wie z.B. Ammonium-gruppen enthalten. Ebenfalls geeignet sind Materialzusammensetzungen der oben genannten Materialien mit anderen Materialtypen, welche Zusammensetzungen die für die Feuchtevariabilität der Schicht 1 notwendige Wasserdampfdurchlässigkeit aufweisen. So sind zum Beispiel Abmischungen von Polyamid mit Polyester oder Ethylenvinylacetat (EVA) möglich. Das Material für Schicht 1 kann weiterhin auch mineralische Zuschläge, wie zum Beispiel Calciumcarbonat ($CaCO_3$), Silikate und/oder Flammschutzmittel, enthalten.

Die Schicht 1 hat vorzugsweise einen Quotienten für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4 und am bevorzugtesten größer 5.

Die Schicht 2 hat einen im Wesentlichen konstanten $s_d$-Wert. Der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) ist kleiner 1.5. Bevorzugt weist die Schicht 2 bei einer mittleren relativen Luftfeuchtigkeit von 71.5% (Messung gemäss DIN EN ISO 12571 Satz C) einen $s_d$-Wert im Bereich von 1 m bis 20 m, bevorzugt von 1 m bis 15 m und am bevorzugtesten von 1 m bis 10 m auf. In einer anderen bevorzugten Ausführungsform liegt der $s_d$-Wert im Bereich von 0.2 m bis 20 m, insbesondere von 0.3 m bis 10 m.

Die Dicke der Schicht 2 liegt zwischen 25 $\mu$m und 350 $\mu$m. Die Schicht 2 hat vorzugsweise eine Dicke von 25 $\mu$m bis 300 $\mu$m und noch bevorzugter von 25 $\mu$m bis 250 $\mu$m und am bevorzugtesten von 40 $\mu$m bis 225 $\mu$m. Insbesondere bevorzugt ist ein Bereich von 30 $\mu$m bis 350 $\mu$m.

Geeignete Materialien für die feuchteunabhängige Schicht 2 sind Materialien mit einem von der angelegten relativen Luftfeuchtigkeit im Wesentlichen unabhängigen $s_d$-Wert. Geeignete Materialien sind zum Beispiel Polyester, Thermoplastische Ether-Ester-Copolymere (TPEE), Polyolefine, Polyethylen (PE), Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon, deren $s_d$-Wert im genannten Bereich liegt. Möglich sind auch Abmischungen, zum Beispiel von Thermoplastischen Ether-Ester-Copolymeren (TPEE) mit EVA oder von Thermoplastischen Polyurethanen (TPU) mit EVA oder mit Polyester. Das Material für die Schicht 2 kann mineralische Zuschläge, wie zum Beispiel Calciumcarbonat ($CaCO_3$), Silikate und/oder Flammschutzmittel enthalten. Des Weiteren kann diese Schicht auch aus geschäumten Materialien, wie beispielsweise wie den zuvor Genannten, bestehen.

Die Schicht 2 kann aus einer Folie oder aus einem Film ausgebildet werden. Unter Film versteht man vorliegend eine geschlossene, luftdichte Schicht. Dieser Film kann entweder durch Extrusion der aus dem Film bestehenden Komponenten oder durch Beschichtung der filmbildenden Komponenten in jeglicher Form dargestellt werden. Bei der Beschichtung ist ein nachträglicher Prozess notwendig, welcher aus den filmbildenden Komponenten den Film erzeugt, dies ist zum Beispiel ein Trocknungs-, Vernetzungs- oder anderweitiger Aktivierungsprozess. Bei der Extrusion hingegen ist der Film beim oder innerhalb 30 Sekunden nach dem Austritt aus dem Extruder bereits gebildet und unterliegt nur einer nachfolgenden Temperaturänderung.

Die Verbindung der Schichten 1 und 2 zur Herstellung der Dampfbremse kann durch Verklebung mit einem Klebstoff, punktuell, teilweise oder vollflächig, weiterhin durch Kaschierung, Laminierung, Kalandrierung, oder durch Beschichtung einer dieser Schichten auf die andere erfolgen. Ebenfalls ist eine Herstellung der erfindungsgemässen Folie als Mehrschicht-Folie mittels Extrusion im Blas- oder Cast/Gieß-Verfahren an Mehrschichtextrudern möglich. Ein solches bevorzugtes Verfahren ist in der WO 2009/065853 A1 beschrieben. In diesem Verfahren wird die Haftung einer nicht kompatiblen Schicht, beispielsweise einer Polyesterschicht zu Polyamid, mittels geeigneten Haftvermittlern oder modifizierten Polymeren erreicht. Möglich ist auch eine direkte Herstellung der Mehrschichtfolie mittels Extrusion im Blas- oder Cast/Giessverfahren an Mehrschichtextrudern ohne Haftvermittler bei Verwendung von TPU als Schicht 2 in Reinform oder in Mischung mit anderen oben genannten Verbindungen.

Die Dampfbremse kann zusätzlich zu den Schichten 1 und 2 weitere Schichten umfassen. Besonders geeignet sind Schichten zur Erhöhung der mechanischen Festigkeit und/oder Wasserspeicherung. So sind zum Beispiel Schichten (Schicht 3) geeignet, welche zur Erhöhung der mechanischen Stabilität dienen, wie z.B. Verstärkungsgelege aus Polyester, Polyamid, Glas, Polyaramid oder Carbon. Eine solche Schicht kann zwischen den beiden Schichten (Schicht 1 und Schicht 2) oder auf einer Außenseite oder auf beiden Außenseiten aufgebracht sein. Wird nur eine Vliesschicht auf der Außenseite aufgebracht, so wird diese vorzugsweise auf die Außenseite von Schicht 1 (mit dem feuchtevariablen $s_d$-Wert) aufgebracht. Die Verbindung einer oder mehrerer weiterer Schichten zur Schicht 1 oder Schicht 2 oder zu beiden Schichten kann mittels Verklebung, Prägung, Verschweissung, Kaschierung oder Laminierung erfolgen. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Des Weiteren sind auch eine oder mehrere innenliegende Schichten (Schicht 4), d.h. zwischen Schicht 1 und Schicht 2, aus wasserdampfspeicherfähigen Materialien, wie zum Beispiel Vlies, Gewebe, Gelege oder Gewirke möglich. Diese können aus Materialien wie zum Beispiel Polyester, Polyamid bestehen, welche durch ihre hydrophile Eigenschaft eine Speicherung von Wasser ermöglichen. Auch sind hierfür Polyolefine wie zum Beispiel Polyethylen, Polypropylen geeignet, welche die Wasserspeicherung zwischen den Schichten durch Kapillarkräfte ermöglichen. Die Verbindung einer solchen Zwischenschicht mit mindestens zwei Schichten (Schicht 1 und Schicht 2) kann zur Darstellung der erfindungsgemässen Dampfbremse durch Verklebung mit einem Klebstoff punktuell oder vollflächig, durch Kaschierung, Laminierung, Kalandrierung oder durch Beschichtung von Schicht 1 und/oder Schicht 2 auf diese Zwischenschicht erfolgen. Geeignete Beschichtungsverfahren sind Extrusionsbeschichtung, Blas- und Cast/Gieß-Extrusionsverfahren, Dispersions- und Emulsionsbeschichtung. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Die Gesamtdicke der wirksamen Schichten 1 und 2 können zum Beispiel mit Hilfe einer geeigneten Mikrotomeinheit und einem entsprechenden Mikroskop bestimmt werden.

Darüber hinaus kann die erfindungsgemässe Folie mit einer Außenschicht (Schicht 5) kombiniert werden. Diese Außenschicht kann aus Vlies, bestehend aus Kunststoff, wie zum Beispiel Polyethylen, Polypropylen, Polyester, Polyamid, oder Zellstoff, wie zum Beispiel Viskose, Hanf, aus Gewebe, Gelege oder Gewirke erzeugt werden. Eine solche Schicht dient zur Veränderung der mechanischen Eigenschaften, d.h. zur Erhöhung der Reiss-, Dehnungs- oder Weiterreissfestigkeit. Zusätzlich kann sich damit der anwendungstechnische Vorteil einer verbesserten Haptik und/oder einer Orientierungshilfe zur technisch korrekten Verlegung der erfindungsgemässen Folie als Dampfbremse oder Dampfsperre für den Installateur ergeben.

Die Gesamtdicke der Dampfbremse, d.h. der Schicht 1, Schicht 2 und gegebenenfalls weiterer Schichten zusammen, liegt vorzugsweise im Bereich von 60 $\mu$m bis 700 $\mu$m, bevorzugt von 60 $\mu$m bis 600 $\mu$m, stärker bevorzugt von 80 $\mu$m bis 550 $\mu$m und am meisten bevorzugt von 100 $\mu$m bis 500 $\mu$m.

Die Wirkungsweise der Dampfbremse wird in der Figur veranschaulicht. Die Figur zeigt einen Versuchsaufbau zur Messung der Richtungssensitivität, wobei der obere Teil der Figur, bezeichnet mit (1), die Messanordnung für einen großen $s_d$-Wert zeigt und der untere Teil der Figur, bezeichnet mit (2), die Messanordnung für einen kleinen $s_d$-Wert zeigt. Die eingekreisten Ziffern 1 und 2 bezeichnen die Schicht 1 bzw. 2 der Dampfbremse. Die Schicht 1 ist feuchtevariabel, die Schicht 2 ist nicht feuchtevariabel. Die Werte 0% r.F. und 85% r.F. bezeichnen die relative Luftfeuchtigkeit, die an die angegebene Schicht 1 bzw. 2 anliegt. Der Pfeil zeigt den Wasserdampfdiffusionsstrom. In der Messanordnung gemäss (1) der Figur liegt somit eine relative Luftfeuchtigkeit von 85% an der nicht feuchtevariablen Schicht 2 an und der $s_d$-Wert ist größer als in der Messanordnung gemäss (2) der Figur, in welcher eine relative Luftfeuchtigkeit von 85% an der feuchtevariablen Schicht 1 anliegt. Der Quotient von $s_d$(groß) zu $s_d$(klein) ist als $\Delta$ definiert. Messtechnisch wird dieser Versuchsaufbau realisiert, indem entweder die Seite mit Schicht 1 als Außenseite der erfindungsgemässen Dampfbremse ins Innere des Prüfgefäßes und damit bei der Dry Cup-Methode (gemäss DIN EN ISO 12572:2001 Satz B) zum Trockenmittel oder nach außen vom Prüfgefäß (zur Klimakammer) orientiert ist.

Die erfindungsgemässe Dampfbremse weist im Wesentlichen bevorzugt bei einer mittleren relativen Luftfeuchtigkeit von 42.5% eine sehr ausgeprägte Richtungssensitivität der Wasserdampfdiffusion auf. Dies bedeutet, je nachdem an welche Seite der erfindungsgemässen Dampfbremse die höhere Feuchtigkeit angelegt wird, umso stärker wirkt sich die Wasserdampfdiffusionsdurchlässigkeit zur trockeneren Seite aus. Der gemäss DIN EN ISO 12572:2001 Satz B mit dem Messgerät GINTRONIC GraviTest 6300 bei den relativen Luftfeuchtigkeiten von 0% zu 85% und 23°C richtungsunterschiedlich gemessene $s_d$-Wert Quotient $\Delta$ (hoher $s_d$-Wert/kleiner $s_d$-Wert = $\Delta$) liegt im Bereich von 1.1 bis 15, bevorzugt von 1.2 bis 12, noch bevorzugter von 1.3 bis 8 und am bevorzugtesten von 1.4 bis 4. In einer weiter bevorzugten Ausführungsform weist die erfindungsgemässe Dampfbremse zusätzlich einen $s_d$-Wert des Gesamtverbundes (d.h. einschließlich aller Schichten) bei 71.5% mittlerer relativer Luftfeuchtigkeit (Messung nach DIN EN ISO 12572:2001 Satz C) von mindestens 1 m auf, bevorzugt größer 1 m. In einer anderen bevorzugten Ausführungsform beträgt der maximale $s_d$-Wert der erfindungsgemässen Dampfbremse bei 25% mittlerer relativer Luftfeuchtigkeit (Messung nach DIN EN ISO 12572:2001 Satz A) weniger als 40 m, bevorzugt weniger als 30 m, am bevorzugtesten weniger als 25 m und am meisten bevorzugt weniger als 20 m.

Die Erfindung betrifft auch die Verwendung der Dampfbremse zur Abdichtung von Gebäudehüllen. Die Dampfbremse kann in Dachkonstruktionen von Gebäuden eingesetzt werden, um die Wasserdampfdiffusion in eine gewünschte Richtung zu lenken.

Die Dampfbremse wird zum Beispiel unter dem Dach so angeordnet, dass Schicht 1 zum Dach zeigt und Schicht 2 innenseitig zum Raum zeigt. Auf diese Weise ist stets die Austrocknung der Dämmebene in den Innenraum gewährleistet, wohingegen die Rückfeuchtung bzw. Auffeuchtung in die Dämmung gehemmt wird. Wird in einem Dach zum Beispiel feuchtes Konstruktionsholz verwendet, kann die Austrocknung der Dachkonstruktion auch dann stattfinden, wenn der darunter liegende Raum über eine zeitweise hohe Raumfeuchte verfügt, wie zum Beispiel Badezimmer oder Küche.

Die erfindungsgemässe Dampfbremse ist feuchtevariabel und aufgrund ihrer Schichtenkombination richtungssensitiv in der Eigenschaft der Wasserdampfdurchlässigkeit. Damit kann sie zur gezielten Austrocknung von Dachkonstruktionen im Häuserbau verwendet werden, ohne dass in feuchten Räumen, wie z.B. Küchen und Bäder, eine ungewünschte Wanderung der Feuchte in die Konstruktion stattfindet. Zusätzlich zu der Eigenschaft der Richtungssensitivität trägt die Feuchtevariabilität der erfindungsgemässen Dampfbremse dazu bei, dass die Austrocknung der Dachkonstruktion und /oder der Dämmebene bei einem hohen Feuchtigkeitsanteil in der Dämmung wesentlich schneller stattfindet als bei einer ausschließlich richtungssensitiven Dampfbremse. Zugleich steigt auch bei stetiger Abnahme des Feuchtigkeitsgehaltes in der Konstruktion der $s_d$-Wert für einen Wasserdampftransport von der Raumseite durch die erfindungsgemässe Dampfbremse in die Konstruktion, wodurch eine Rückfeuchtung bzw. Auffeuchtung der Konstruktion stets langsamer erfolgt als die Austrocknung in entgegengesetzter Wasserdampfdiffusionsrichtung.

Die Erfindung umfasst auch ein System, das die Dampfbremse und ein abzudichtendes Bauteil umfasst. Bei dem Bauteil kann es sich um ein Material handeln, das im Baubereich in der Gebäudehülle oder im Dachbereich abzudichten ist.

Weiterhin betrifft die Erfindung die Verwendung einer Folie zur Abdichtung eines durch eine Außenhaut geschlossenen Raumes in Gebäuden. Beispielsweise können damit Gebäude zur Konstruktionsebene hin, z.B. im Dachbereich, abgedichtet werden.

In einer bevorzugten Ausführungsform handelt es sich bei der Folie um eine Dampfbremse, die bevorzugt in Dachkonstruktionen von Gebäuden eingesetzt wird. In einer anderen bevorzugten Ausführungsform der Erfindung wird die Folie in Wandkonstruktionen, Bodenkonstruktionen und/oder Deckenkonstruktionen von Gebäuden verwendet.

In einer Ausführungsform umfasst die erfindungsgemäss verwendete Folie eine Folienseite X und eine gegenüberliegende Folienseite Y, die derart definiert sind, dass die Wasserdampfdiffusion von der Folienseite X zur Folienseite Y grösser ist als die Wasserdampfdiffusion von der Folienseite Y zur Folienseite X, mit der Maßgabe, dass die Folienseite X bei dem Versuchsaufbau gemäss DIN EN ISO 12572:2001 Satz B (85% r.F. zu 0% r.F.; 23°C) zur Seite höherer relativer Luftfeuchtigkeit zeigt und sich dabei eine größere Wasserdampfdiffusion messen lässt, als wenn bei gleicher Messung die Folienseite Y zur Seite höherer relativer Luftfeuchtigkeit zeigt. Die Folie wird zum Abdichten so angeordnet, dass die Folienseite X zur Außenhaut ausgerichtet ist. Die Folie ist innerhalb des geschlossenen Raumes angeordnet. In einer anderen bevorzugten Ausführungsform ist die Folienseite X zur Innenseite der Außenhaut ausgerichtet.

Am meisten bevorzugt ist die Folie innerhalb des geschlossenen Raumes so angeordnet, dass die Folienseite X zur Innenseite der Außenhaut ausgerichtet ist.

Vorliegend bedeutet die Bezeichnung, dass die Folienseite X zur Außenhaut ausgerichtet ist, dass die Folienseite X näher zur Außenhaut liegt als die Folienseite Y. Dabei kann die Folienseite X innerhalb oder außerhalb des geschlossenen Raumes angeordnet werden. Ebenso kann die Folie zur Innenseite oder Außenseite der Außenhaut angeordnet werden.

Die Bezeichnung, dass die Folienseite X zur Innenseite der Außenhaut ausgerichtet ist, bedeutet, dass die Folienseite X näher zur Innenseite der Außenhaut liegt als die Folienseite Y.

In einer hierin beschriebenen Ausführungsform wird die Folie außerhalb des geschlossenen Raumes angeordnet. In dieser Ausführungsform ist die Folienseite X zur Außenseite der Außenhaut ausgerichtet. In einer weiteren Ausgestaltung ist die Folie außerhalb des geschlossenen Raumes so angeordnet, dass die Folienseite X zur Außenseite der Außenhaut ausgerichtet ist.

Die Bezeichnung, dass die Folienseite X zur Außenseite der Außenhaut ausgerichtet ist, bedeutet, dass die Folienseite X näher zur Außenseite der Außenhaut liegt als die Folienseite Y.

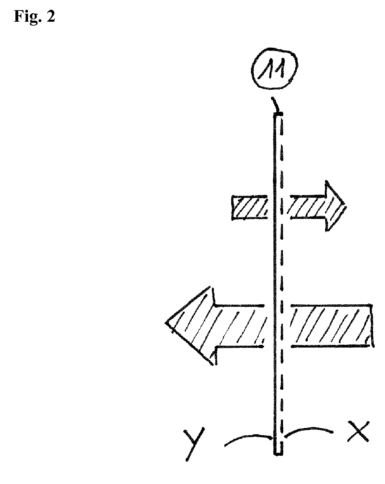

Figur 2 zeigt das Funktionsprinzip einer erfindungsgemäß verwendeten Folie mit Folienseite X und Folienseite Y. Die Folie, dargestellt mit Bezugsziffer 11, umfasst die Folienseite X, die mit gestrichelter Linie dargestellt ist, und die Folienseite Y, die mit durchgezogener Linie dargestellt ist. Die Dicke der dargestellten Pfeile veranschaulicht das Ausmaß der Wasserdampfdiffusion. Von Folienseite X diffundiert mehr Wasserdampf (dickerer Pfeil) zur Folienseite Y, als Wasserdampf (dünnerer Pfeil) von Folienseite Y zur Folienseite X diffundiert.

In einer anderen Ausführungsform umfasst die erfindungsgemäss verwendete Folie mindestens zwei Schichten (Schicht 1 und Schicht 2). Eine der beiden Schichten, die Schicht 1, ist feuchtevariabel oder feuchteabhängig. Dies bedeutet, dass sie einen von der relativen Luftfeuchtigkeit abhängigen $s_d$-Wert zeigt. Die andere Schicht, Schicht 2, ist feuchteinvariabel oder feuchteunabhängig oder im Wesentlichen feuchteinvariabel oder feuchteunabhängig, also nichtfeuchtevariabel. Dies bedeutet, dass sie einen von der relativen Luftfeuchtigkeit unabhängigen $s_d$-Wert oder im Wesentlichen unabhängigen $s_d$-Wert zeigt. Die Folie wird zum Abdichten so angeordnet, dass die Schicht 1 zur Außenhaut ausgerichtet ist. Die Folie ist innerhalb des geschlossenen Raumes angeordnet. In einer anderen bevorzugten Ausführungsform ist die Schicht 1 zur Innenseite der Außenhaut ausgerichtet. Am meisten bevorzugt ist die Folie innerhalb des geschlossenen Raumes so angeordnet, dass die Schicht 1 zur Innenseite der Außenhaut ausgerichtet ist.

Vorliegend bedeutet die Bezeichnung, dass die Schicht 1 zur Außenhaut ausgerichtet ist, dass die Schicht 1 näher zur Außenhaut liegt als die Schicht 2. Entsprechend bedeutet die Bezeichnung, dass die Schicht 1 zur Innenseite der Außenhaut ausgerichtet ist, dass die Schicht 1 näher zur Innenseite der Außenhaut liegt als die Folienseite Y.

Vorliegend bezieht sich der $s_d$-Wert auf eine Bestimmung gemäss DIN EN ISO 12572:2001 mit dem Messgerät GINTRONIC GraviTest 6300 nach der Dry Cup / Wet Cup Methode. Bei dieser Methode werden $s_d$-Werte bei 23 °C im Trockenbereich (0% zu 50 % relative Luftfeuchtigkeit; DIN EN ISO 12572:2001 Satz A / Dry Cup, 25% mittlere relative Luftfeuchtigkeit), (0% zu 85 % relative Luftfeuchtigkeit; DIN EN ISO 12572:2001 Satz B / Dry Cup, 42.5% mittlere relative Luftfeuchtigkeit) und im Feuchtbereich (50% zu 93 % relative Luftfeuchtigkeit; DIN EN ISO 12572:2001 Satz C / Wet Cup, 71.5% mittlere relative Luftfeuchtigkeit) bestimmt. Die Messung erfolgt mittels eines Prüfgefäßes analog DIN EN ISO 12572:2001 Anhang C. Das Prüfgefäß wird durch den Probenkörper, das heißt die Folie, verschlossen. Innerhalb des Prüfgefäßes wird das gewünschte Klima durch die Verwendung von Trockenmittel oder Salzlösungen eingestellt. Das Gegenklima außerhalb des Prüfgefäßes wird mittels Klimakammer realisiert. Somit bedeutet 25 % mittlere relative Luftfeuchtigkeit, dass bei der Messung an der jeweiligen Schicht auf einer Seite eine relative Luftfeuchtigkeit von 0 % (vorzugsweise innerhalb des Prüfgefäßes) und auf der anderen Seite eine relative Luftfeuchtigkeit von 50 % (vorzugsweise außerhalb des Prüfgefäßes in der Klimakammer) anliegt. Entsprechend sind bei 71.5% mittlerer relativer Luftfeuchtigkeit die relativen Luftfeuchtigkeiten 50 % und 93 % (beispielsweise kann eine relative Luftfeuchtigkeit von 93 % mittels einer gesättigten, wässrigen Ammoniumdihydrogenphosphat-Lösung $((NH_4)H_2PO_4)$ innerhalb des Prüfgefäßes realisiert werden). Für die Bestimmung einer mittleren relativen Luftfeuchtigkeit von 42.5% wird das Verfahren nach DIN EN ISO 12572:2001 Satz B angewendet. In der Klimakammer außerhalb des Prüfgefäßes wird eine relative Luftfeuchtigkeit von 85% verwendet und innerhalb des Prüfgefäßes wird mittels Trockenmittel eine ungefähre relative Luftfeuchtigkeit von 0% eingestellt.

Der $s_d$-Wert einer einzelnen Schicht der Folie wird durch die Wasserdampfdiffusionswiderstandszahl $\mu$ und die verwendete Schichtdicke definiert:

$$s_d\text{-Wert [m]} = \text{Wasserdampfdiffusionswiderstandszahl } \mu \ x \ \text{Schichtdicke [m]}$$

Somit können definierte $s_d$-Werte einer Einzelschicht über Materialien oder Materialkombinationen erhalten werden, welche entweder eine hohe Wasserdampfdiffusionswiderstandszahl $\mu$ und eine geringe Schichtdicke oder eine niedrige Wasserdampfdiffusionswiderstandszahl $\mu$ und eine hohe Schichtdicke aufweisen.

Die Gesamtdicke der Schicht 1 und Schicht 2 der Folie liegt vorzugsweise im Bereich von 20 $\mu$m bis 550 $\mu$m, bevorzugt von 35 $\mu$m bis 475 $\mu$m, stärker bevorzugt von 55 $\mu$m bis 400 $\mu$m und am meisten bevorzugt von 80 $\mu$m bis 350 $\mu$m, jeweils bezogen auf die Schicht 1 und 2. In einer anderen bevorzugten Ausführungsform liegt die Gesamtdicke der Schicht 1 und Schicht 2 zwischen 75 $\mu$m und 550 $\mu$m. Insbesondere bevorzugt ist ein Bereich von 90 $\mu$m bis 500 $\mu$m, stärker bevorzugt von 100 $\mu$m bis 350 $\mu$m. Dicken über 550 $\mu$m können für die Verarbeitung als Folie in Bahnenform zu Steifigkeitsproblemen führen, sind jedoch nicht ausgeschlossen.

Die Schicht 1 der Folie hat vorzugsweise eine Schichtdicke im Bereich von 10 $\mu$m bis 200 $\mu$m, bevorzugt von 20 $\mu$m bis 175 $\mu$m, stärker bevorzugt von 30 $\mu$m bis 150 $\mu$m und am bevorzugtesten von 40 $\mu$m bis 125 $\mu$m. In einer anderen bevorzugten Ausführungsform liegt die Dicke der Schicht 1 zwischen 50 $\mu$m und 200 $\mu$m. Insbesondere bevorzugt ist ein Bereich von 60 $\mu$m bis 150 $\mu$m.

Geeignete Materialien für die feuchtevariable Schicht 1 der Folie sind Polyamid, zum Beispiel Polyamid 6, Polyamid 66 und weitere Polyamid-Typen. Weiterhin sind Ionomere geeignet. Ionomere sind thermoplastische Kunststoffe, welche zumindest teilweise funktionelle Gruppen, wie Säuregruppen z.B. Sulfonsäure oder Acrylsäure, enthalten, oder bei welchen solche Gruppen in den Bausteinen der Polymerketten vorkommen können. Diese funktionellen Gruppen sind teilweise oder vollständig durch Alkali- oder Erdalkali-Ionen oder andere LewisSäuren, wie zum Beispiel Aluminium- oder Zink-Kationen, neutralisiert. Aus der EP 1 372 956 B1 ist die Verwendung von Ionomeren in Dampfbremsen bekannt. Für die Schicht 1 sind weiterhin Materialien möglich, welche basische funktionelle Gruppen wie z.B. Ammoniumgruppen enthalten. Ebenfalls geeignet sind Materialzusammensetzungen der oben genannten Materialien mit anderen Materialtypen, welche Zusammensetzungen die für die Feuchtevariabilität der Schicht 1 notwendige Wasserdampfdurchlässigkeit aufweisen. So sind zum Beispiel Abmischungen von Polyamid mit Polyester oder Ethylenvinylacetat (EVA) möglich. Das Material für Schicht 1 kann weiterhin auch mineralische Zuschläge, wie zum Beispiel Calciumcarbonat ($CaCO_3$), Silikate und/oder Flammschutzmittel, enthalten.

Weitere geeignete Materialien für die Schicht 1 sind Polyvinylalkohole, Ethylenvinylalkohol, oder andere copolymerisierte Vinylalkohole oder hydrolysierte Vinylacetate. Weiterhin geeignet sind Abmischungen von Ethylenvinylalkohol, Polyvinylalkohol, copolymerisierten Vinylalkoholen, hydrolysierten Vinylacetaten oder Ionomeren mit Polyester, Ethylenvinylacetat (EVA), Polyethylen, Polypropylen, Thermoplastischen Polyurethanen oder anderen mit diesen feuchtevariablen Polymeren mischbaren Komponenten. Als Zuschläge kann Schicht 1 weiterhin auch mineralische Zuschläge, wie zum Beispiel Calciumcarbonat ($CaCO_3$), Silikate und/oder Flammschutzmittel und/oder UV-Stabilisatoren enthalten.

Die Schicht 1 der Folie hat vorzugsweise einen Quotienten für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4 und am bevorzugtesten größer 5.

Die Schicht 2 der Folie hat einen im Wesentlichen konstanten $s_d$-Wert. Der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) ist kleiner 1.5. Bevorzugt weist die Schicht 2 bei einer mittleren relativen Luftfeuchtigkeit von 71.5% (Messung gemäss DIN EN ISO 12571 Satz C) einen $s_d$-Wert im Bereich von 1 m bis 20 m, bevorzugt von 1 m bis 15 m und am bevorzugtesten von 1 m bis 10 m auf. In einer anderen bevorzugten Ausführungsform liegt der $s_d$-Wert im Bereich von 0.2 m bis 20 m, insbesondere von 0.3 m bis 10 m.

Die Schicht 2 der Folie hat vorzugsweise eine Dicke von 10 $\mu$m bis 350 $\mu$m, stärker bevorzugt von 15 $\mu$m bis 300 $\mu$m und noch bevorzugter von 25 $\mu$m bis 250 $\mu$m und am bevorzugtesten von 40 $\mu$m bis 225 $\mu$m. In einer anderen bevorzugten Ausführungsform liegt die Dicke der Schicht 2 zwischen 25 $\mu$m und 350 $\mu$m. Insbesondere bevorzugt ist ein Bereich von 30 $\mu$m bis 350 $\mu$m.

Geeignete Materialien für die feuchteunabhängige Schicht 2 der Folie sind Materialien mit einem von der angelegten relativen Luftfeuchtigkeit im Wesentlichen unabhängigen $s_d$-Wert. Geeignete Materialien sind zum Beispiel Polyester, Thermoplastische Ether-Ester-Copolymere (TPEE), Polyolefine, Polyethylen (PE), Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon, deren $s_d$-Wert im genannten Bereich liegt. Möglich sind auch Abmischungen, zum Beispiel von Thermoplastischen Ether-Ester-Copolymeren (TPEE) mit EVA oder von Thermoplastischen Polyurethanen (TPU) mit EVA oder mit Polyester. Das Material für die Schicht 2 kann mineralische Zuschläge, wie zum Beispiel Calciumcarbonat ($CaCO_3$), Silikate und/oder Flammschutzmittel enthalten. Des Weiteren kann diese Schicht auch aus geschäumten Materialien, wie beispielsweise wie den zuvor Genannten, bestehen.

Die Schicht 2 kann aus einer Folie oder aus einem Film ausgebildet werden. Unter Film versteht man vorliegend eine geschlossene, luftdichte Schicht. Dieser Film kann entweder durch Extrusion der aus dem Film bestehenden Komponenten oder durch Beschichtung der filmbildenden Komponenten in jeglicher Form dargestellt werden. Bei der Beschichtung ist ein nachträglicher Prozess notwendig, welcher aus den filmbildenden Komponenten den Film erzeugt, dies ist zum Beispiel ein Trocknungs-, Vernetzungs- oder anderweitiger Aktivierungsprozess. Bei der Extrusion hingegen ist der Film beim oder innerhalb 30 Sekunden nach dem Austritt aus dem Extruder bereits gebildet und unterliegt nur einer nachfolgenden Temperaturänderung.

Die Verbindung der Schichten 1 und 2 zur Herstellung der Folie kann durch Verklebung mit einem Klebstoff, punktuell, teilweise oder vollflächig, weiterhin durch Kaschierung, Laminierung, Kalandrierung, oder durch Beschichtung einer dieser Schichten auf die andere erfolgen. Ebenfalls ist eine Herstellung der erfindungsgemässen Folie als Mehrschicht-Folie mittels Extrusion im Blas- oder Cast/Gieß-Verfahren an Mehrschichtextrudern möglich. Ein solches bevorzugtes Verfahren ist in der WO 2009/065853 A1 beschrieben. In diesem Verfahren wird die Haftung einer nicht kompatiblen Schicht, beispielsweise einer Polyesterschicht zu Polyamid, mittels geeigneten Haftvermittlern oder modifizierten Polymeren erreicht. Möglich ist auch eine direkte Herstellung der Mehrschichtfolie mittels Extrusion im Blas- oder Cast/Giessverfahren an Mehrschichtextrudern ohne Haftvermittler bei Verwendung von TPU als Schicht 2 in Reinform oder in Mischung mit anderen oben genannten Verbindungen.

In einer Ausführungsform umfasst die Folie mindestens zwei Schichten. Bevorzugt ist die Folie mehrschichtig. Insbesondere umfasst die Folie mindestens drei, vier, fünf oder sechs Schichten, insbesondere umfasst sie mindestens drei Schichten oder mindestens vier Schichten.

Die Folie kann zusätzlich zu den Schichten 1 und 2 weitere Schichten umfassen. Besonders geeignet sind Schichten zur Erhöhung der mechanischen Festigkeit und/oder Wasserspeicherung. So sind zum Beispiel Schichten (Schicht 3) geeignet, welche zur Erhöhung der mechanischen Stabilität dienen, wie z.B. Verstärkungsgelege aus Polyester, Polyamid, Glas, Polyaramid oder Carbon. Eine solche Schicht kann zwischen den beiden Schichten (Schicht 1 und Schicht 2) oder auf einer Außenseite oder auf beiden Außenseiten aufgebracht sein. Wird nur eine Vliesschicht auf der Außenseite aufgebracht, so wird diese vorzugsweise auf die Außenseite von Schicht 1 (mit dem feuchtevariablen $s_d$-Wert) aufgebracht. Die Verbindung einer oder mehrerer weiterer Schichten zur Schicht 1 oder Schicht 2 oder zu beiden Schichten kann mittels Verklebung, Prägung, Verschweissung, Kaschierung oder Laminierung erfolgen. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Des Weiteren sind auch eine oder mehrere innenliegende Schichten (Schicht 4), d.h. zwischen Schicht 1 und Schicht 2, aus wasserdampfspeicherfähigen Materialien, wie zum Beispiel Vlies, Gewebe, Gelege oder Gewirke möglich. Diese können aus Materialien wie zum Beispiel Polyester, Polyamid bestehen, welche durch ihre hydrophile Eigenschaft eine Speicherung von Wasser ermöglichen. Auch sind hierfür Polyolefine wie zum Beispiel Polyethylen, Polypropylen geeignet, welche die Wasserspeicherung zwischen den Schichten durch Kapillarkräfte ermöglichen. Die Verbindung einer solchen Zwischenschicht mit mindestens zwei Schichten (Schicht 1 und Schicht 2) kann zur Darstellung der erfindungsgemäss verwendeten Folie durch Verklebung mit einem Klebstoff punktuell oder vollflächig, durch Kaschierung, Laminierung, Kalandrierung oder durch Beschichtung von Schicht 1 und/oder Schicht 2 auf diese Zwischenschicht erfolgen. Geeignete Beschichtungsverfahren sind Extrusionsbeschichtung, Blas- und Cast/Gieß-Extrusionsverfahren, Dispersions- und Emulsionsbeschichtung. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Die Gesamtdicke der wirksamen Schichten 1 und 2 können zum Beispiel mit Hilfe einer geeigneten Mikrotomeinheit und einem entsprechenden Mikroskop bestimmt werden.

Darüber hinaus kann die erfindungsgemäss verwendete Folie mit einer Außenschicht (Schicht 5) kombiniert werden. Diese Außenschicht kann aus Vlies, bestehend aus Kunststoff, wie zum Beispiel Polyethylen, Polypropylen, Polyester, Polyamid, oder Zellstoff, wie zum Beispiel Viskose, Hanf, aus Gewebe, Gelege oder Gewirke erzeugt werden. Eine solche Schicht dient zur Veränderung der mechanischen Eigenschaften, d.h. zur Erhöhung der Reiss-, Dehnungs- oder Weiterreissfestigkeit. Zusätzlich kann sich damit der anwendungstechnische Vorteil einer verbesserten Haptik und/oder einer Orientierungshilfe zur technisch korrekten Verlegung der Folie, insbesondere als Dampfbremse oder Dampfsperre, für den Installateur ergeben.

Die Anordnung der Schichten, besonders der Schicht 1 und Schicht 2 innerhalb der erfindungsgemäss verwendeten Folie, und die Anzahl der zusätzlichen Schichten unterliegen keinen Beschränkungen. Beispielsweise können eine weitere Schicht 3, Schicht 4 und gegebenenfalls noch eine oder mehrere weitere Schichten sowohl zwischen der Schicht 1 und Schicht 2 als auch aussen von Schicht 1 und/oder Schicht 2 angeordnet sein. Ebenso können die anderen Schichten der erfindungsgemässen Folie, wenn diese eine Mehrschichtfolie mit n Schichten ist, wobei n eine ganze Zahl und größer oder gleich 2 ist, aus Materialien bestehen, welche entweder unter die obengenannte Definition der feuchtevariablen Schicht (Schicht 1) und/oder die obengenannte Definition der im Wesentlichen feuchteunabhängigen Schicht (Schicht 2) fallen.

Die Gesamtdicke der Folie, d.h. der Schicht 1, Schicht 2 und gegebenenfalls weiterer Schichten zusammen, liegt vorzugsweise im Bereich von 20 μm bis 700 μm, bevorzugt von 60 μm bis 600 μm, stärker bevorzugt von 80 μm bis 550 μm und am meisten bevorzugt von 100 μm bis 500 μm.

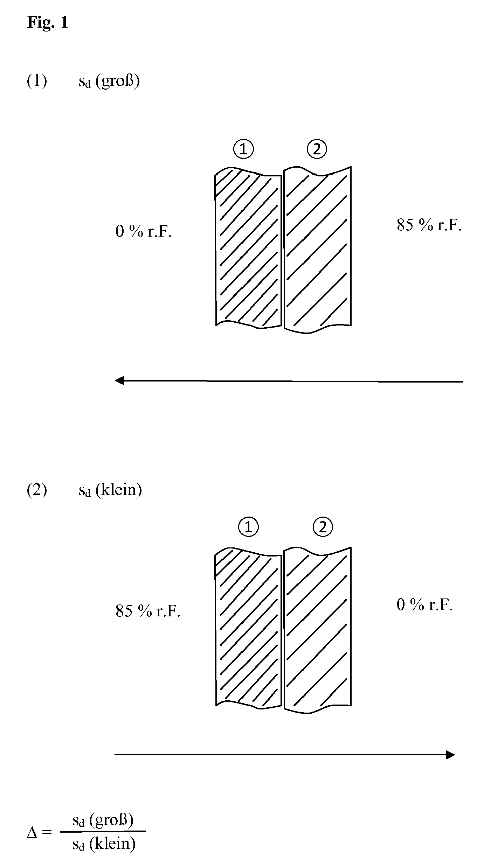

In einer Ausführungsform wird eine Folie mit zwei Folienseiten X und Y verwendet, wobei zur weiteren Erläuterung Bezug genommen wird auf den in Figur 1 dargestellten Versuchsaufbau, der bereits bei der Bestimmung des Quotienten Δ verwendet wurde. Die Folie wird durch 2 Messreihen charakterisiert. In der ersten Messreihe wird die Folie mit einer festgelegten Folienseite zur höheren relativen Luftfeuchtigkeit weisend gemäss DIN EN ISO 12572:2001 Satz B gemessen. In der zweiten Messreihe wird die Folie umgedreht und die Messung gemäss DIN EN ISO 12572:2001 Satz B erneut durchgeführt, wobei im Versuchsaufbau die zuvor nicht zur höheren relativen Luftfeuchtigkeit orientierte Folienseite nun zu dieser höheren relativen Luftfeuchtigkeit weist. Die Folie weist je nach Messreihe einen unterschiedlichen $s_d$-Wert auf. Der Versuchsaufbau der Messreihe mit dem kleineren $s_d$-Wert als Messergebnis definiert die Folienseite X. Wenn die Folienseite X in diesem Messaufbau zur höheren relativen Luftfeuchtigkeit orientiert ist, ist die Wasserdampfdiffusion von Folienseite X zur Folienseite Y stets grösser ist als die Wasserdampfdiffusion von Folienseite Y zur Folienseite X bei dem Versuchsaufbau gemäss DIN EN ISO 12572:2001 Satz B (85% r.F. zu 0% r.F.; 23°C).

Die Wirkungsweise einer Folie mit Schicht 1 und Schicht 2 wird in Figur 1 weiter veranschaulicht. Figur 1 zeigt einen Versuchsaufbau zur Messung der Richtungssensitivität, wobei der obere Teil der Figur, bezeichnet mit (1), die Messanordnung für einen großen $s_d$-Wert zeigt und der untere Teil der Figur, bezeichnet mit (2), die Messanordnung für einen kleinen $s_d$-Wert zeigt. Die eingekreisten Ziffern 1 und 2 bezeichnen die Schicht 1 bzw. 2 der Folie, insbesondere einer Dampfbremse. Die Schicht 1 ist feuchtevariabel, die Schicht 2 ist nicht feuchtevariabel. Die Werte 0% r.F. und 85% r.F. bezeichnen die relative Luftfeuchtigkeit, die an die angegebene Schicht 1 bzw. 2 anliegt. Der Pfeil zeigt den Wasserdampfdiffusionsstrom. In der Messanordnung gemäss (1) der Figur liegt somit eine relative Luftfeuchtigkeit von 85% an der nicht feuchtevariablen Schicht 2 an und der $s_d$-Wert ist größer als in der Messanordnung gemäss (2) der Figur, in welcher eine relative Luftfeuchtigkeit von 85% an der feuchtevariablen Schicht 1 anliegt. Der Quotient von $s_d$(groß) zu $s_d$(klein) ist als Δ definiert. Messtechnisch wird dieser Versuchsaufbau realisiert, indem entweder die Seite mit Schicht 1 als Außenseite der Folie ins Innere des Prüfgefäßes und damit bei der Dry Cup-Methode (gemäss DIN EN ISO 12572:2001 Satz B) zum Trockenmittel oder nach außen vom Prüfgefäß (zur Klimakammer) orientiert ist.

Die erfindungsgemäss verwendete Folie weist im Wesentlichen bevorzugt bei einer mittleren relativen Luftfeuchtigkeit von 42.5% eine sehr ausgeprägte Richtungssensitivität der Wasserdampfdiffusion auf. Dies bedeutet, je nachdem an welche Seite der Folie die höhere Feuchtigkeit angelegt wird, umso stärker wirkt sich die Wasserdampfdiffusionsdurchlässigkeit zur trockeneren Seite aus. Der gemäss DIN EN ISO 12572:2001 Satz B mit dem Messgerät GINTRONIC GraviTest 6300 bei den relativen Luftfeuchtigkeiten von 0% zu 85% und 23°C richtungsunterschiedlich gemessene $s_d$-Wert Quotient Δ (hoher $s_d$-Wert/kleiner $s_d$-Wert = Δ) liegt im Bereich von 1.1 bis 15, bevorzugt von 1.2 bis 12, noch bevorzugter von 1.3 bis 8 und am bevorzugtesten von 1.4 bis 4. In einer weiter bevorzugten Ausführungsform weist die erfindungsgemäss verwendete Folie zusätzlich einen $s_d$-Wert des Gesamtverbundes (d.h. einschließlich aller Schichten) bei 71.5% mittlerer relativer Luftfeuchtigkeit (Messung nach DIN EN ISO 12572:2001 Satz C) von mindestens 1 m auf, bevorzugt größer 1 m. In einer anderen bevorzugten Ausführungsform beträgt der maximale $s_d$-Wert der Folie bei 25% mittlerer relativer Luftfeuchtigkeit (Messung nach DIN EN ISO 12572:2001 Satz A) weniger als 40 m, bevorzugt weniger als 30 m, am bevorzugtesten weniger als 25 m und am meisten bevorzugt weniger als 20 m.

Insbesondere betrifft die Erfindung die Verwendung der Folie zur Abdichtung von Räumen in Gebäuden, wobei die Räume durch eine Außenhaut abgeschlossen werden. Insbesondere können damit Gebäudehüllen abgedichtet werden. Die Ausrichtung der Folie erfolgt mit der Folienseite X oder der Schicht 1 zur Außenhaut. Vorzugsweise handelt es sich bei der Außenhaut um eine Konstruktionsebene in einem Gebäude. Die Konstruktionsebene bezeichnet im Wandaufbau, Bodenaufbau und/oder Deckenaufbau des Gebäudes oder im Dachaufbau des Gebäudes die Ebene, in welcher konstruktive Elemente eingesetzt werden. Diese konstruktiven Elemente können z.B. eine eingesetzte Holzkonstruktion, Stahlkonstruktion oder anderweitige Elemente mit konstruktiven Eigenschaften sein. Beispielhaft hierfür werden eine Dachkonstruktion mit konstruktiven Holzelementen oder eine Wandkonstruktion mit Wandkonstruktionselementen aus Holz und/oder Stahl genannt. Eine beispielsweise im Dach vorhandene Holzkonstruktion kann zugleich auch Dämmelemente enthalten. Die Anbringung der Folie mit der Folienseite X zu dieser Konstruktionsebene bewirkt eine begünstigte Austrocknung der Konstruktionsebene durch die Folie in die auf der anderen Folienseite befindliche Umgebung. Die Folie kann so beispielsweise in Dachkonstruktionen von Gebäuden eingesetzt werden, um die Wasserdampfdiffusion in eine gewünschte Richtung zu lenken.

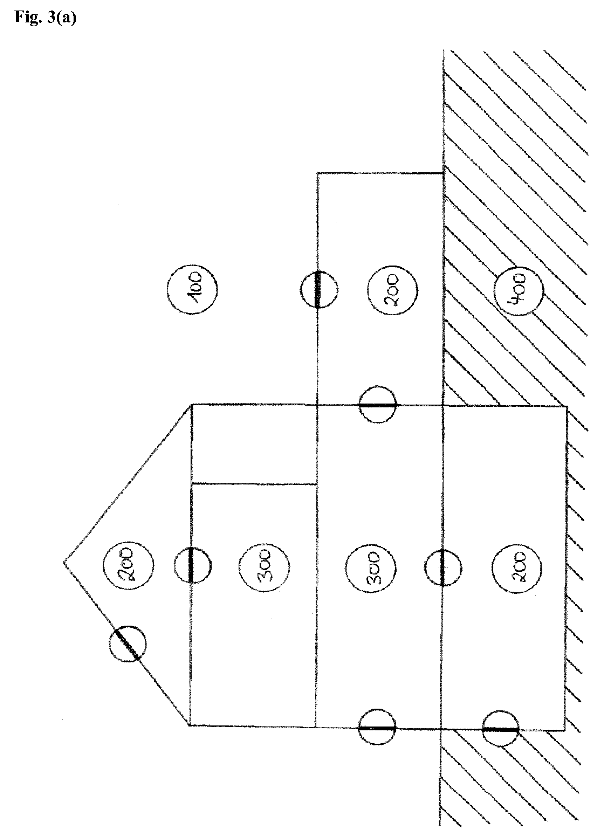

Als eine bevorzugte Ausführungsform für eine Außenhaut ist beispielhaft in Figur 3(a) schematisch ein Haus gezeigt. In Figur 3(a) bezeichnet Bezugsziffer 100 den Raum außerhalb des Hauses, d.h. außerhalb der Außenhaut; Bezugsziffer 200 Pufferräume, z.B. Keller, Garage, Dachboden, oder unbeheizter Raum; Bezugsziffer 300 Innenräume;

und Bezugsziffer 400 Erdreich. Damit veranschaulichen Bezugsziffer 100 das Außenklima, Bezugsziffer 200 Pufferklima, und Bezugsziffer 300 Innenraumklima. Figur 3(a) zeigt über die Kreise mit eingekreistem waagrechten oder senkrechten dickem Strich an, an welchen Stellen des Hauses die Folie angebracht werden kann, um die gewünschte Abdichtung zu erreichen. Die Folie kann unter dem Dach angebracht werden, aber auch im Keller oder in der Aussenwand des Hauses, oder zwischen Garage und der angrenzenden Wand des Hauses.

Erfindungsgemäß ist die Außenhaut nicht auf das in Figur 3(a) schematisch dargestellte Haus beschränkt. Die Außenhaut kann beliebige Formen annehmen und unterliegt keinen besonderen Beschränkungen.

Bezugnehmend auf Figur 3(a) kann die Folie bevorzugt unter einem Dach so angeordnet werden, dass die Folienseite X zum Dach (der Konstruktionsebene oder Außenhaut) zeigt und Folienseite Y innenseitig zum Raum zeigt. In dieser bevorzugten Ausführungsform ist die Folie innerhalb des Raumes angeordnet und die Folienseite X ist zur Innenseite des Daches, d.h. der Konstruktionsebene/Außenhaut, ausgerichtet. Das bedeutet, dass die Folienseite Y weiter von der Konstruktionsebene/Außenhaut entfernt ist als die Folienseite X. Durch diese Anordnung der Folie ist die Austrocknung der Konstruktionsebene, die eine Dämmebene umfassen kann, in den Innenraum gewährleistet, wohingegen eine Rückfeuchtung bzw. Auffeuchtung in die Konstruktionsebene bzw. Dämmung gehemmt wird. Wird in einem Dach zum Beispiel feuchtes Konstruktionsholz verwendet, kann die Austrocknung der Dachkonstruktion auch dann stattfinden, wenn der darunter liegende Raum über eine zeitweise hohe Raumfeuchte verfügt, wie zum Beispiel Badezimmer oder Küche.

Die erfindungsgemäss verwendete Folie ist feuchtevariabel und aufgrund ihrer Schichtenkombination richtungssensitiv in der Eigenschaft der Wasserdampfdurchlässigkeit. Damit kann sie zur gezielten Austrocknung von Konstruktionen im Häuserbau verwendet werden, ohne dass in feuchten Räumen, wie z.B. Küchen und Bäder, eine ungewünschte Wanderung der Feuchte in die Konstruktion stattfindet. Zugleich steigt auch bei stetiger Abnahme des Feuchtigkeitsgehaltes in der Konstruktion der $s_d$-Wert für einen Wasserdampftransport von der Raumseite durch die Folie in die Konstruktion, wodurch eine Rückfeuchtung bzw. Auffeuchtung der Konstruktion stets langsamer erfolgt als die Austrocknung in entgegengesetzter Wasserdampfdiffusionsrichtung.

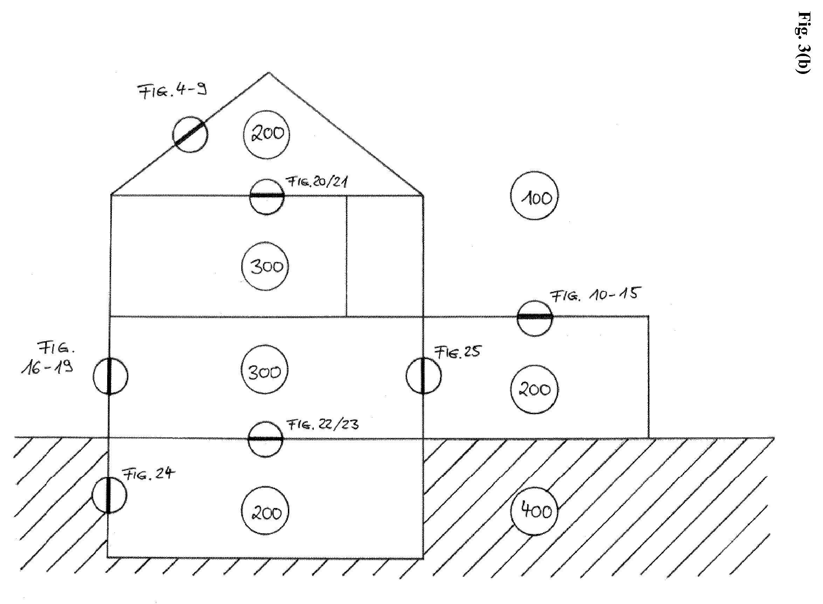

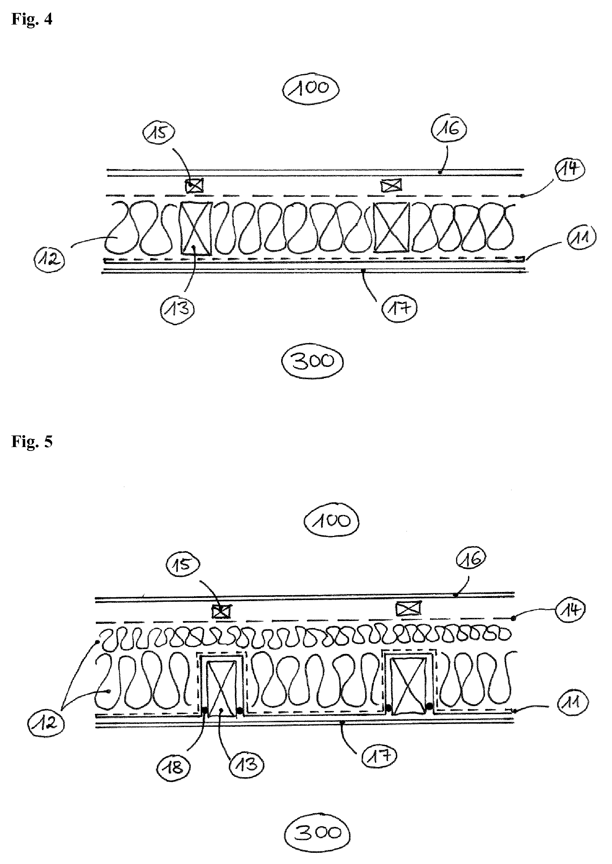

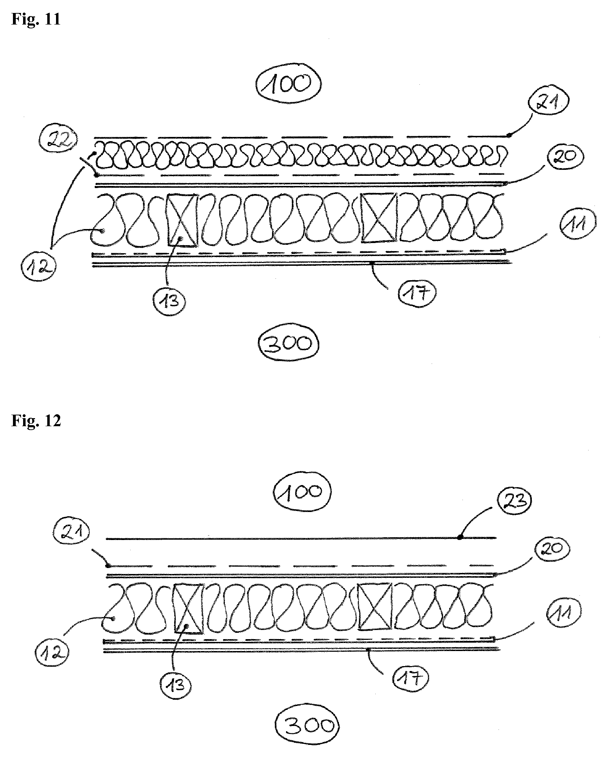

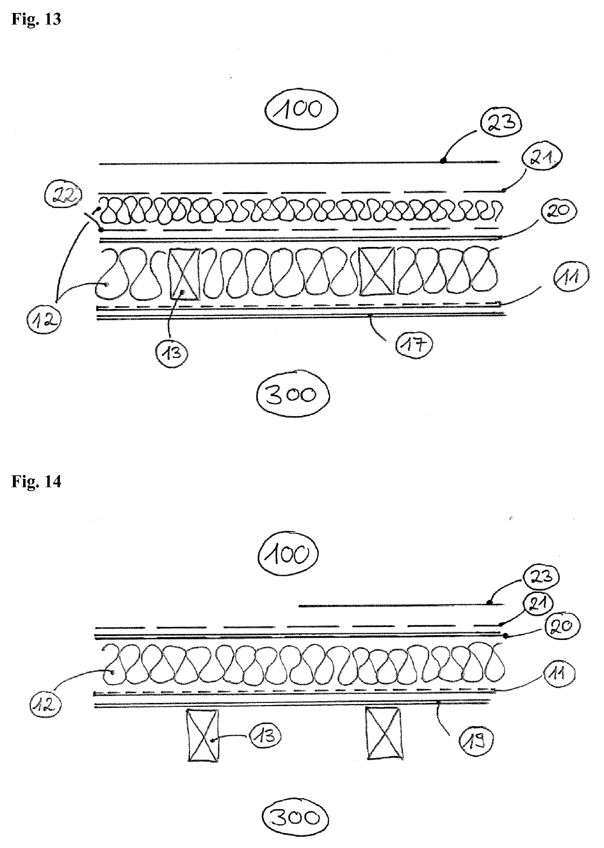

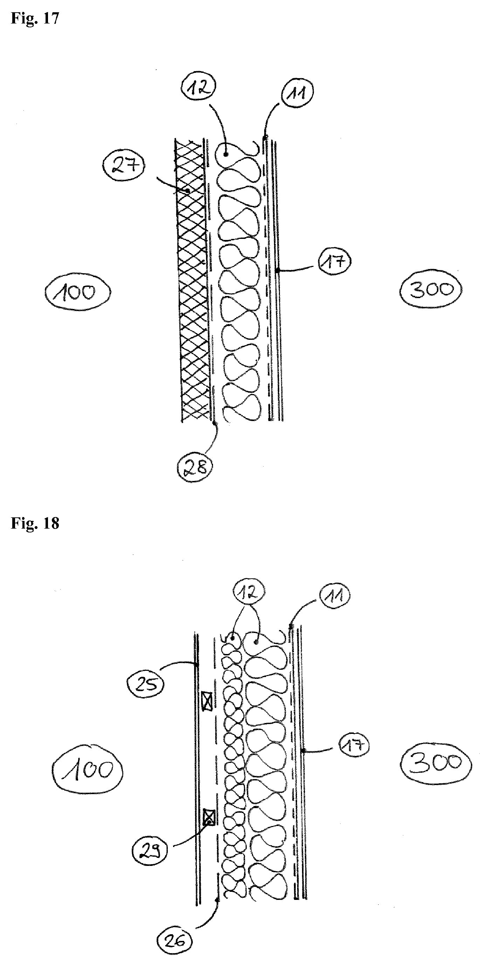

Bevorzugte Ausführungsformen der Erfindung sind in den Figuren 4 bis 18 und 20 bis 25 gezeigt. Figur 3(b) zeigt die mögliche Anwendung der Folie in den, in den Figuren 4 bis 25 gezeigten Fälle. Die Figuren 4 bis 25 sind aus sich heraus für den Fachmann anhand der Bezugszeichen selbsterklärend. In den Figuren bezeichnen die folgenden Bezugsziffern folgende Merkmale:

| | |
|---|---|
| 11 | Folie; |
| 12 | Dämmung; |
| 13 | Tragkonstruktion, z.B. Sparren oder Balken, etc.; |
| 14 | Unterdachbahn oder Unterdachplatte; |
| 15 | Konterlattung; |
| 16 | Traglattung und Dacheindeckung; |
| 17 | Innenraumverkleidung; |
| 18 | doppelseitiges Klebeband oder Fixierhilfe zur luftdichten Fixierung der Folienseite Y; |
| 19 | Schalung; |
| 20 | Verlegeunterlage; |
| 21 | Abdichtungsbahn; |
| 22 | innere Abdichtungsbahn; |
| 23 | Substrat (z.B. Bekiesung, Begrünung, Gehbelag, etc.); |
| 24 | Aufdoppelung; |
| 25 | Verkleidung; |
| 26 | Fassadenbahn; |
| 27 | Fachwerk; |
| 28 | Trennlage; |
| 29 | Traglattung für Hinterlüftung; |
| 30 | Holzwerkstoff-Platte; |
| 31 | Bodenbelag; |
| 32 | Gipsfaserplatte-Beplankung; |
| 33 | Drainage; |
| 34 | Beton; |

| | |
|---|---|
| 100 | Raum außerhalb der Außenhaut; |
| 200 | Pufferraum, z.B. Keller, Garage, Dachboden, oder unbeheizter Raum; |
| 300 | Innenraum; und |
| 400 | Erdreich. |

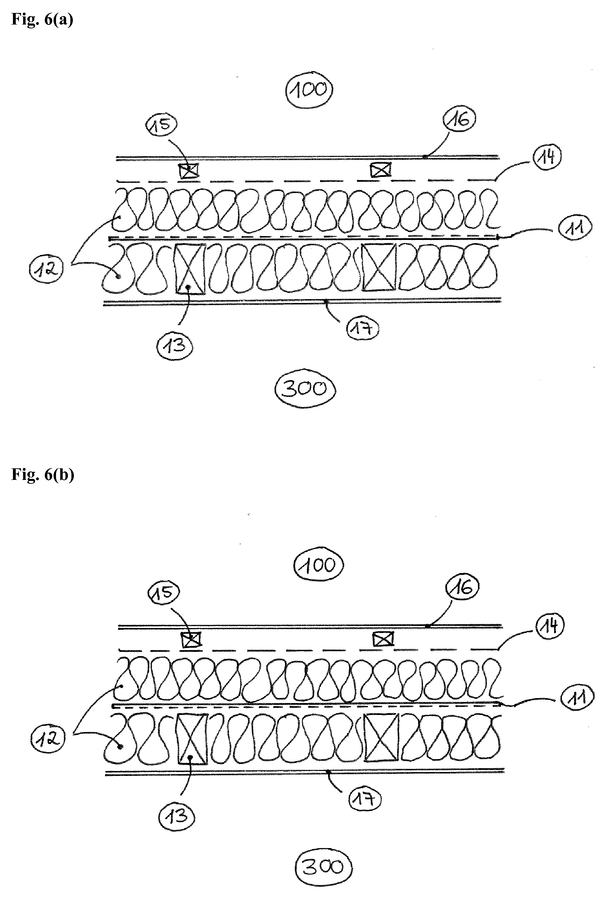

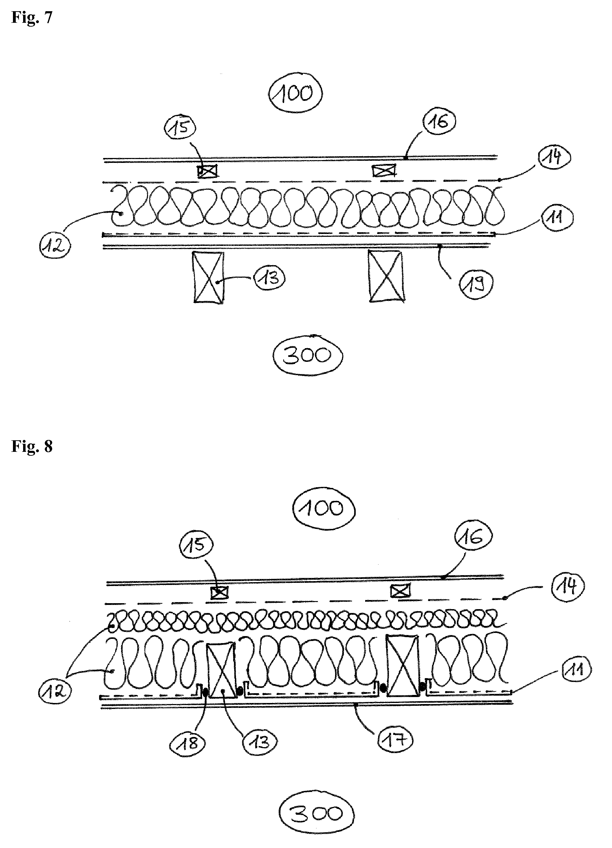

Die Figuren 4, 5, 6(a), 6(b), 7, 8 und 9 zeigen bevorzugte Ausführungsformen für die Verwendung der Folie 11 in verschiedenen Steildachkonstruktionen. In den Figuren ist die Folie 11 mit der Folienseite X zur Dämmung 12 dargestellt. In den Figuren 6(a) und 6(b) sind zwei Dämmebenen 12 gezeigt. Bei Einsatz der Folie zwischen mehreren Dämmebenen wird die Folie nach der vor Feuchtigkeit zu schützenden Dämmung ausgerichtet, wie in Figur 6(a) oder 6(b) gezeigt. Das bedeutet, dass die Folienseite X zu der zu schützenden bzw. auszutrocknenden Seite orientiert wird. Die Figuren 7, 8 und 9 zeigen die Verwendung der Folie bei einer Sanierung einer Dachkonstruktion von aussen. Dabei sind Aufbauten in den Figuren gezeigt. In Figur 7 ist die Folienseite X zu der vor Feuchtigkeit zu schützenden Dämmung orientiert. Dies bedingt im Sanierungsfall, dass die Folie zu Teilen der Konstruktionselemente mit der Folienseite Y orientiert wird. In diesem Fall ist bei der verschlauften Verlegung eine luftdichte Fixierung der Folienseite Y am Konstruktionselement gemäss Figur 7 von Vorteil.

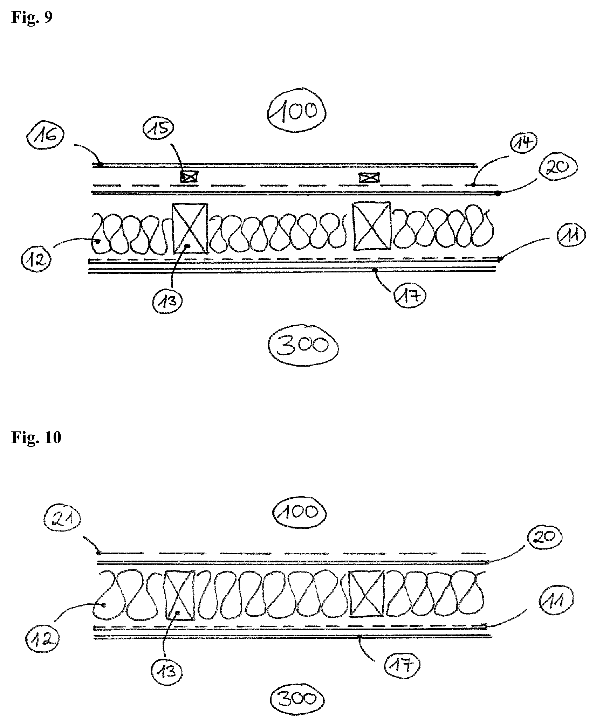

Figuren 10 bis 15 zeigen bevorzugte Ausführungsformen für die Verwendung der Folie in verschiedenen Flachdachkonstruktionen, wobei die Einsatzmöglichkeiten aus Figur 3(b) ersichtlich sind.

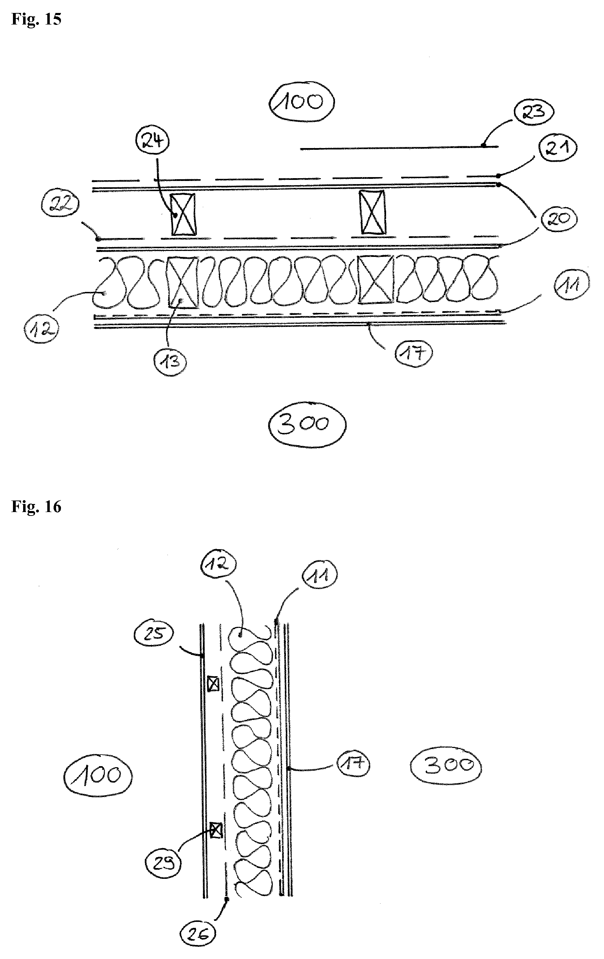

Figuren 16 bis 18 zeigen bevorzugte Ausführungsformen für die Verwendung der Folie in verschiedenen Wandkonstruktionen, wobei die Einsatzmöglichkeiten aus Figur 3(b) ersichtlich sind.

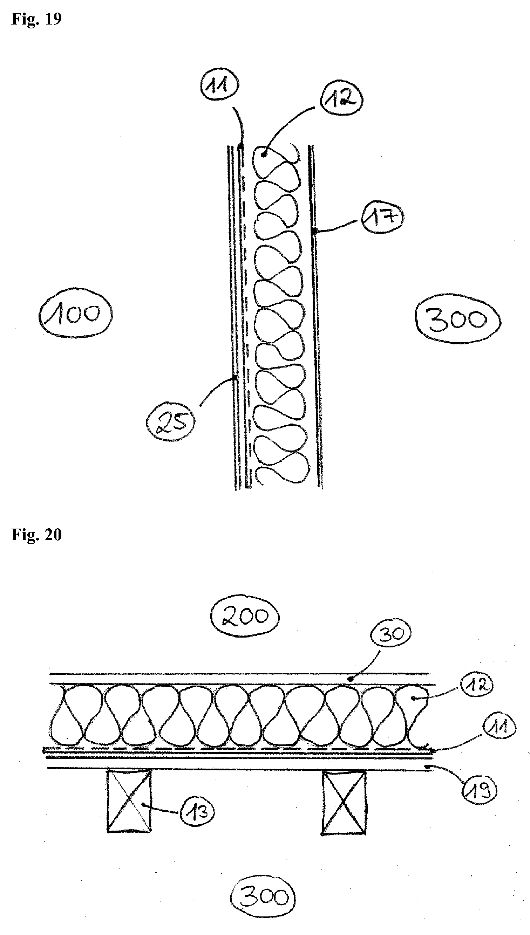

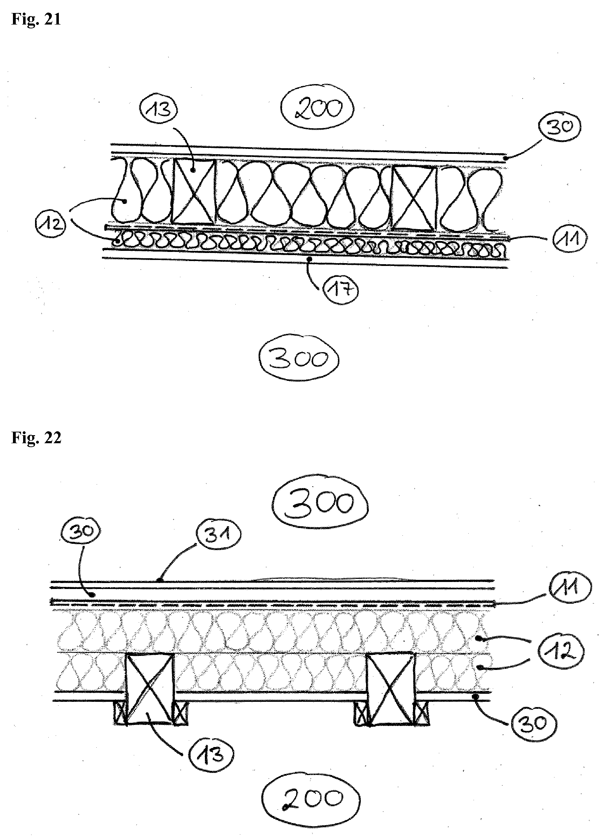

Figuren 20 und 21 zeigen bevorzugte Ausführungsformen für die Verwendung der Folie in einem Dachboden, wobei die Einsatzmöglichkeiten aus Figur 3(b) ersichtlich sind.

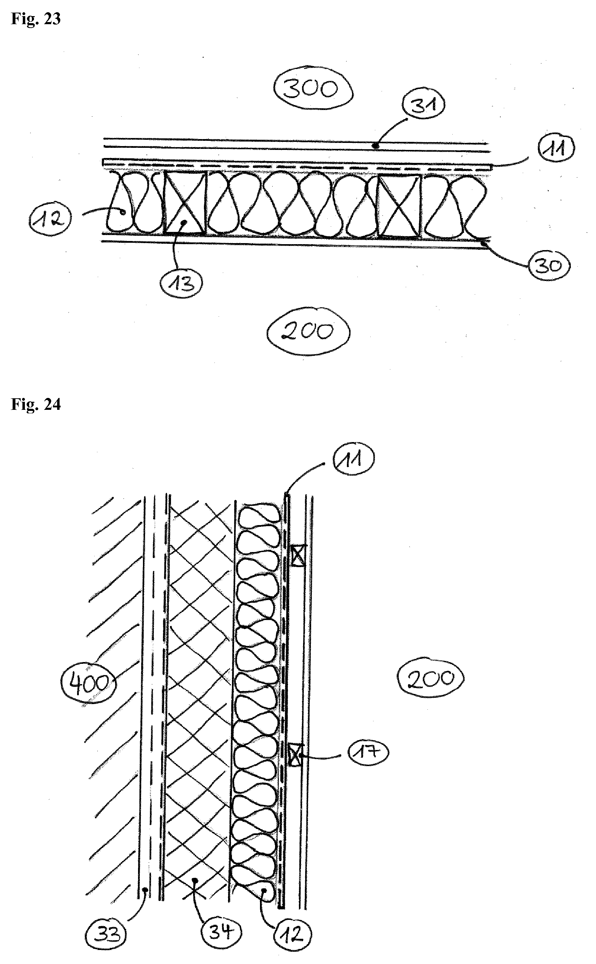

Figuren 22 und 23 zeigen bevorzugte Ausführungsformen für die Verwendung der Folie in einer Kellerdecke, wobei die Einsatzmöglichkeiten aus Figur 3(b) ersichtlich sind.

Figur 24 zeigt eine bevorzugte Ausführungsform für die Verwendung der Folie an einer Außenwand, die vom Keller zum Erdreich zeigt, vgl. Figur 3(b).

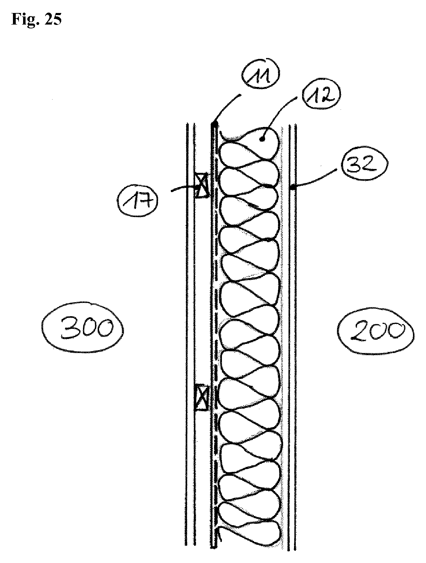

Figur 25 zeigt eine bevorzugte Ausführungsform für die Verwendung der Folie an einer Außenwand, die zur Garage zeigt, vgl. Figur 3(b).

In hierin beschriebenen Ausführungsformen kann die Folie auch zum Schutz der Konstruktionsebene im Außenbereich eingesetzt werden. Dies trifft besonders auf Situationen zu, in denen das Klima ausserhalb des Gebäudes stetig eine höhere relative Luftfeuchtigkeit und/oder Temperatur im Vergleich zum Gebäudeinneren aufweist. In diesem Fall soll die Konstruktionsebene vor der von Aussenklima eindringenden Feuchtigkeit geschützt werden, um eine Kondensation der Luftfeuchtigkeit innerhalb der Konstruktion zu unterbinden. Hierzu wird die Folie von Aussen auf die Konstruktionsebene aufgebracht, wobei die Folienseite X zur Konstruktionsebene und die Folienseite Y zur Außenseite zeigt. Beispielhaft wird auf Figur 19 verwiesen.

Figur 19 zeigt die Verwendung der Folie in einer Wandkonstruktion, wobei diese Anwendung in einer Klimazone mit hoher Umgebungsfeuchte Anwendung findet. Die in Figur 19 gezeigte Anordnung kann zum gezielten Schutz von Konstruktionen im Häuserbau verwendet werden, ohne dass in sehr feuchten Klimaregionen eine ungewünschte Wanderung der Feuchte in die Konstruktion stattfindet. Zugleich steigt auch bei stetiger Abnahme des Feuchtigkeitsgehaltes in der Konstruktion der $s_d$-Wert für einen Wasserdampftransport von der Außenseite durch die erfindungsgemäss verwendete Folie in die Konstruktion, wodurch eine Auffeuchtung der Konstruktion stets langsamer erfolgt als die Austrocknung in entgegengesetzter Wasserdampfdiffusionsrichtung.

Die Erfindung betrifft gemäß Patentanspruch 15 auch ein Verfahren zur Abdichtung eines durch eine Außenhaut geschlossenen Raumes in Gebäuden, wobei eine Folie mit einer Folienseite X und einer gegenüberliegenden Folienseite Y derart angeordnet wird, dass die Folienseite X zur Außenhaut ausgerichtet ist, wobei die Folienseiten X und Y derart definiert sind, dass die Wasserdampfdiffusion von der Folienseite X zur Folienseite Y grösser ist als die Wasserdampfdiffusion von der Folienseite Y zur Folienseite X, mit der Maßgabe, dass die Folienseite X bei dem Versuchsaufbau gemäss DIN EN ISO 12572:2001 Satz B (85% r.F. zu 0% r.F.; 23°C) zur Seite höherer relativer Luftfeuchtigkeit zeigt und sich dabei eine größere Wasserdampfdiffusion messen lässt, als wenn bei gleicher Messung die Folienseite Y zur Seite höherer relativer Luftfeuchtigkeit zeigt.

Die Erfindung betrifft weiterhin gemäß Patentanspruch 16 ein Verfahren zur Abdichtung eines durch eine Außenhaut geschlossenen Raumes in Gebäuden, wobei eine Folie, die mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteinvariabel ist und der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist, so angeordnet wird, dass die Schicht 1 zur Außenhaut ausgerichtet ist.

Bevorzugte Ausführungsformen der Verfahren unter Verwendung der Folie sind so definiert, wie sie oben bei der Verwendung der Folie beschrieben sind.

Die Erfindung umfasst auch ein System, das die Folie und eine Außenhaut umfasst. Die Folie und die Außenhaut sind bevorzugt so definiert wie oben beschrieben.

Die Erfindung wird anhand der folgenden Beispiele veranschaulicht, die bevorzugte Ausführungsformen der Erfindung zeigen, ohne deren Schutzbereich einzuschränken.

BEISPIELE

Beispiel 1

Eine 0.050 mm dicke Polyamid (PA)-Folie (z.B. das Produkt Isover Vario KM, bzw. Difunorm Vario) wird mit einer zweiten Folie von 0.152 mm Dicke, basierend auf einer Mischung aus Ethylen-Vinyl-Acetat (EVA) und einem thermoplastisch-elastomeren Ether-Ester-Blockcopolymer (TPE-E) gemäss Patent DE 10 2006 018 351 B4, verbunden. Die Verbindung dieser beiden Folien wird über eine Punktverklebung mit einem Schmelzkleber (*Hotmelt*) des Typs Alfa H 5000/0 der Firma Alfa Klebstoffe AG ausgeführt. Die Punktverklebung findet über ein quadratisches 10 mm Raster statt, in welchem jeder Kreuzungspunkt des Rasters einen im Durchmesser von 1 mm aufgetragenen Schmelzkleberpunkt enthält. Nach Auftragung dieser Punkte auf die Polyamid-Folie wird diese mit der zweiten Folie plan abgedeckt und mittels Anrollen durch eine Schaumstoffrolle angepresst.

Die entstandene Mehrschichtfolie weist eine Gesamtdicke von 0.202 mm außerhalb der Punktverklebung auf.

Die unten in Tabelle 1 aufgeführten $s_d$-Werte wurden gemäss der Dry Cup- bzw. Wet Cup-Methode, DIN EN ISO 12572:2001 Satz A, B und C, bestimmt, wobei die einzelnen Proben, wie angegeben, mit Schicht 1 bzw. Schicht 2 als der dem Prüfklima zugewandten Seite gemessen wurden. Vorliegend bedeutet r.F. die relative Luftfeuchtigkeit.

Tabelle 1

| Messung DRY CUP 0/50 DIN 12572 Satz A | Schicht 1 | Schicht 2 | Zur Prüfkammer (50% r.F.) zugewandte Seite | $s_d$-Wert [m] |
|---|---|---|---|---|
| 1 | PA 0.050mm | TPE-E/EVA 0.152mm | Schicht 1 | 5.0 |
| 2 | PA 0.050mm | TPE-E/EVA 0.152mm | Schicht 2 | 5.8 |
| 3 | PA 0.050mm | - | Einzelschicht 1 | 3.5 |
| 4 | - | TPE-E/EVA 0.152mm | Einzelschicht 2 | 1.7 |
| Messung DRY CUP 0/85 DIN 12572 Satz B | Schicht 1 | Schicht 2 | Zur Prüfkammer (85% r.F.) zugewandte Seite | $s_d$-Wert [m] |
| 1 | PA 0.050mm | - | Einzelschicht 1 | 1.8 |
| 2 | - | TPE-E/EVA 0.152mm | Einzelschicht 2 | 1.7 |
| 3 | PA 0.050mm | TPE-E/EVA 0.152mm | Schicht 1 | 1.9 |
| 4 | PA 0.050mm | TPE-E/EVA 0.152mm | Schicht 2 | 4.1 |
| Messung WET CUP 93/50 DIN 12572 Satz C | Schicht 1 | Schicht 2 | Zur Prüfkammer (50% r.F.) zugewandte Seite | $s_d$-Wert [m] |
| 1 | PA 0.050mm | TPE-E/EVA 0.152mm | Schicht 1 | 2.9 |
| 2 | PA 0.050mm | TPE-E/EVA 0.152mm | Schicht 2 | 1.8 |
| 3 | PA 0.050mm | - | Einzelschicht 1 | 0.5 |
| 4 | - | TPE-E/EVA 0.152mm | Einzelschicht 2 | 1.6 |

Beispiel 2

Eine 0.050 mm dicke Polyamid (PA)-Folie (z.B. das Produkt Isover Vario KM, bzw. Difunorm Vario) wird mit einer zweiten Folie von 0.117 mm Dicke, basierend auf einer Mischung aus Ethylen-Vinyl-Acetat (EVA) und einem thermoplastisch-elastomeren Ether-Ester-Blockcopolymer (TPE-E) gemäss Patent DE 10 2006 018 351 B4, verbunden. Die Verbindung dieser beiden Folien wird über eine Punktverklebung mit einem Schmelzkleber (*Hotmelt*) des Typs Alfa H 5000/0 der Firma Alfa Klebstoffe AG ausgeführt. Die Punktverklebung findet über ein quadratisches 10 mm Raster statt, in welchem jeder Kreuzungspunkt des Rasters einen im Durchmesser von 1 mm aufgetragenen Schmelzkleberpunkt enthält. Nach Auftragung dieser Punkte auf die Polyamid-Folie wird diese mit der zweiten Folie plan abgedeckt und mittels Anrollen durch eine Schaumstoffrolle angepresst.

Die entstandene Mehrschichtfolie weist eine Gesamtdicke von 0.167 mm außerhalb der Punktverklebung auf.

Die unten in Tabelle 2 aufgeführten $s_d$-Werte wurden gemäss der Dry Cup- bzw. Wet Cup-Methode, DIN EN ISO 12572:2001 Satz A, B und C, bestimmt, wobei die einzelnen Proben, wie angegeben, mit Schicht 1 bzw. Schicht 2 als der dem Prüfklima zugewandten Seite gemessen wurden.

Tabelle 2

| Messung DRY CUP 0/50 DIN 12572 Satz A | Schicht 1 | Schicht 2 | Zur Prüfkammer (50% r.F.) zugewandte Seite | $s_d$-Wert [m] |
|---|---|---|---|---|
| 1 | PA 0.050mm | TPE-E/EVA 0.117mm | Schicht 1 | 4.6 |
| 2 | PA 0.050mm | TPE-E/EVA 0.117mm | Schicht 2 | 5.2 |
| 3 | PA 0.050mm | - | Einzelschicht 1 | 3.5 |
| 4 | - | TPE-E/EVA 0.117mm | Einzelschicht 2 | 1.3 |
| Messung DRY CUP 0/85 DIN 12572 Satz B | Schicht 1 | Schicht 2 | Zur Prüfkammer (85% r.F.) zugewandte Seite | $s_d$-Wert [m] |
| 1 | PA 0.050mm | - | Einzelschicht 1 | 1.8 |
| 2 | - | TPE-E/EVA 0.117mm | Einzelschicht 2 | 1.3 |
| 3 | PA 0.050mm | TPE-E/EVA 0.117mm | Schicht 1 | 2.0 |
| 4 | PA 0.050mm | TPE-E/EVA 0.117mm | Schicht 2 | 3.8 |
| Messung WET CUP 93/50 DIN 12572 Satz C | Schicht 1 | Schicht 2 | Zur Prüfkammer (50% r.F.) zugewandte Seite | $s_d$-Wert [m] |
| 1 | PA 0.050mm | TPE-E/EVA 0.117mm | Schicht 1 | 2.4 |
| 2 | PA 0.050mm | TPE-E/EVA 0.117mm | Schicht 2 | 1.4 |
| 3 | PA 0.050mm | - | Einzelschicht 1 | 0.5 |
| 4 | - | TPE-E/EVA 0.117mm | Einzelschicht 2 | 1.2 |

Die in Abhängigkeit von der Orientierung der Dampfbremse gemessenen $s_d$-Werte veranschaulichen die Richtungssensitivität der Dampfbremse.

**Patentansprüche**

1. Verwendung einer Folie zum Abdichten eines durch eine Außenhaut geschlossenen Raumes in Gebäuden, wobei die Folie eine Folienseite X und eine gegenüberliegende Folienseite Y aufweist und die Folie so angeordnet wird, dass die Folienseite X zur Außenhaut ausgerichtet ist, wobei die Folienseiten X und Y derart definiert sind, dass die Wasserdampfdiffusion von der Folienseite X zur Folienseite Y grösser ist als die Wasserdampfdiffusion von der Folienseite Y zur Folienseite X, mit der Maßgabe, dass die Folienseite X bei dem Versuchsaufbau gemäss DIN EN ISO 12572:2001 Satz B (85% r.F. zu 0% r.F.; 23°C) zur Seite höherer relativer Luftfeuchtigkeit zeigt und sich dabei eine größere Wasserdampfdiffusion messen lässt, als wenn bei gleicher Messung die Folienseite Y zur Seite höherer relativer Luftfeuchtigkeit zeigt, und wobei die Folie innerhalb des geschlossenen Raumes angeordnet wird.

2. Verwendung einer Folie zum Abdichten eines durch eine Außenhaut geschlossenen Raumes in Gebäuden, wobei die Folie mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteinvariabel ist und der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist, wobei die Folie so angeordnet wird, dass die Schicht 1 zur Außenhaut ausgerichtet ist, und wobei die Folie innerhalb des geschlossenen Raumes angeordnet wird.

3. Verwendung nach Anspruch 1 oder 2, wobei die Schicht 1 zur Folienseite X ausgerichtet ist oder die Außenseite der Schicht 1 die Folienseite X bildet.

4. Verwendung nach einem der Ansprüche 1 bis 3, wobei die Folie eine Dampfbremse ist.

5. Verwendung nach einem der Ansprüche 1 bis 3, wobei die Außenhaut durch Wandkonstruktionen, Bodenkonstruktionen und/oder Deckenkonstruktionen in Gebäuden gebildet wird.

6. Verwendung nach einem der Ansprüche 2 bis 5, wobei die Folie Schicht 1, Schicht 2 und wenigstens eine weitere Schicht, insbesondere zur Erhöhung der mechanischen Festigkeit und/oder Wasserspeicherung, umfasst.

7. Verwendung nach einem der Ansprüche 1 bis 6, wobei die Gesamtdicke der Folie im Bereich von 20 $\mu$m bis 700 $\mu$m, vorzugsweise von 60 $\mu$m bis 600 $\mu$m, liegt.

8. Verwendung nach einem der Ansprüche 2 bis 7, wobei die Schicht 1 eine Dicke im Bereich von 10 $\mu$m bis 200 $\mu$m, vorzugsweise zwischen 30 $\mu$m und 200 $\mu$m, aufweist, und/oder die Schicht 2 eine Dicke im Bereich von 10 $\mu$m bis 350 $\mu$m, vorzugsweise zwischen 25 $\mu$m und 350 $\mu$m, aufweist

9. Verwendung nach einem der Ansprüche 2 bis 8, wobei das Material für die Schicht 1 ausgewählt ist aus der Gruppe bestehend aus Polyamid, Ionomere, Polyvinylalkohole, Ethylenvinylalkohol, hydrolysierte Vinylacetate, Abmischungen von Ethylenvinylalkohol, Polyvinylalkohol oder hydrolysierten Vinylacetaten, und Abmischungen von Ionomeren mit Polyester, Ethylenvinylacetat, Polyethylen, Polypropylen oder Thermoplastischen Polyurethanen.

10. Verwendung nach einem der Ansprüche 2 bis 9, wobei das Material für die Schicht 2 ausgewählt ist aus der Gruppe bestehend aus Polyester, Thermoplastische Ether-Ester-Copolymere (TPEE), Polyolefine, Polyethylene, Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon.

11. Verwendung nach einem der Ansprüche 2 bis 10, wobei für die Schicht 1 der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4, vorzugsweise größer 5, ist, und/oder die Schicht 2 bei 71.5% mittlerer relativer Luftfeuchtigkeit einen $s_d$-Wert im Bereich von 1 m bis 20 m, vorzugsweise von 1 m bis 15 m, aufweist.

12. Verwendung nach einem der Ansprüche 2 bis 11, wobei die Schicht 2 als Folie oder Film ausgebildet ist.

13. Verwendung nach einem der Ansprüche 1 bis 12, wobei die Außenhaut eine Dach-, Decken-, Wand- oder Bodenkonstruktion umfasst.

**14.** Verwendung nach einem der Ansprüche 1 bis 13, wobei die Außenhaut Stahl und/oder Holz umfasst, und gegebenenfalls Dämmelemente enthält.

**15.** Verfahren zur Abdichtung eines durch eine Außenhaut geschlossenen Raumes in Gebäuden, wobei eine Folie mit einer Folienseite X und einer gegenüberliegenden Folienseite Y derart angeordnet wird, dass die Folienseite X zur Außenhaut ausgerichtet ist, wobei die Folienseiten X und Y derart definiert sind, dass die Wasserdampfdiffusion von der Folienseite X zur Folienseite Y grösser ist als die Wasserdampfdiffusion von der Folienseite Y zur Folienseite X, mit der Maßgabe, dass die Folienseite X bei dem Versuchsaufbau gemäss DIN EN ISO 12572:2001 Satz B (85% r.F. zu 0% r.F.; 23°C) zur Seite höherer relativer Luftfeuchtigkeit zeigt und sich dabei eine größere Wasserdampfdiffusion messen lässt, als wenn bei gleicher Messung die Folienseite Y zur Seite höherer relativer Luftfeuchtigkeit zeigt, und wobei die Folie innerhalb des geschlossenen Raumes angeordnet wird.

**16.** Verfahren zur Abdichtung eines durch eine Außenhaut geschlossenen Raumes in Gebäuden, wobei eine Folie, die mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteinvariabel ist und der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist, so angeordnet wird, dass die Schicht 1 zur Außenhaut ausgerichtet ist, und wobei die Folie innerhalb des geschlossenen Raumes angeordnet wird.

**17.** Verfahren nach Anspruch 15 oder 16, wobei die Folie und/oder die Außenhaut wie in einem der Ansprüche 3 bis 14 definiert sind.

**18.** System, umfassend eine Folie, wie in einem der Ansprüche 1 bis 4 oder 6 bis 12 definiert, und eine Außenhaut, wie in einem der Ansprüche 1, 5, 13 oder 14 definiert.

**19.** Dampfbremse, die mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 3 ist, und die andere Schicht (Schicht 2) im wesentlichen feuchteunabhängig ist und der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit kleiner 1.5 ist, wobei die Schicht 2 eine Dicke zwischen 25 $\mu$m und 350 $\mu$m aufweist, mit der Maßgabe, dass die Schicht nicht eine Dicke von 25 $\mu$m aufweist.

**20.** Dampfbremse nach Anspruch 19, wobei die Schicht 1 und Schicht 2 zusammen eine Dicke im Bereich von 35 $\mu$m bis 475 $\mu$m, oder zwischen 75 $\mu$m und 550 $\mu$m, aufweisen.

**21.** Dampfbremse nach Anspruch 19 oder 20, wobei die Schicht 1 eine Dicke im Bereich von 10 $\mu$m bis 200 $\mu$m, vorzugsweise zwischen 30 $\mu$m und 200 $\mu$m, aufweist.

**22.** Dampfbremse nach einem der Ansprüche 19 bis 21, wobei die Schicht 2 eine Dicke im Bereich von 40 $\mu$m bis 225 $\mu$m aufweist

**23.** Dampfbremse nach einem der Ansprüche 19 bis 22, wobei das Material für die Schicht 1 Polyamid und/oder Ionomere enthält.

**24.** Dampfbremse nach einem der Ansprüche 19 bis 23, wobei das Material für die Schicht 2 ausgewählt ist aus der Gruppe bestehend aus Polyester, Thermoplastische Ether-Ester-Copolymere (TPEE), Polyolefine, Polyethylene, Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon.

**25.** Dampfbremse nach einem der Ansprüche 19 bis 24, wobei für die Schicht 1 der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4, vorzugsweise größer 5, ist.

**26.** Dampfbremse nach einem der Ansprüche 19 bis 25, wobei die Schicht 2 bei 71.5% mittlerer relativer Luftfeuchtigkeit einen $s_d$-Wert im Bereich von 1 m bis 20 m, vorzugsweise von 1 m bis 15 m, aufweist.

27. Dampfbremse nach einem der Ansprüche 19 bis 26, wobei die Schicht 2 als Folie oder Film ausgebildet ist.

28. Dampfbremse nach einem der Ansprüche 19 bis 27, wobei die Schichten 1 und 2 durch Verklebung mit Klebstoff, Kaschierung, Kalandrierung oder durch Beschichtung einer Schicht auf die andere miteinander verbunden werden.

29. Dampfbremse nach einem der Ansprüche 19 bis 27, wobei die Schichten 1 und 2 als Mehrschichtfolie hergestellt werden.

30. Dampfbremse nach einem der Ansprüche 19 bis 29, umfassend wenigstens eine weitere Schicht, insbesondere zur Erhöhung der mechanischen Festigkeit und/oder Wasserspeicherung.

31. Dampfbremse nach einem der Ansprüche 19 bis 30, wobei ihre Gesamtdicke im Bereich von 60 $\mu$m bis 600 $\mu$m liegt.

32. Verwendung einer Dampfbremse nach einem der Ansprüche 19 bis 31 zur Abdichtung von Gebäudehüllen.

33. System, umfassend eine Dampfbremse nach einem der Ansprüche 19 bis 31 und ein abzudichtendes Bauteil.

**Claims**

1. Use of a film for sealing a space closed by an outer skin in buildings, wherein the film has a film side X and an opposite film side Y and the film is arranged such that the film side X is aligned with the outer skin, wherein the film sides X and Y are defined such that the water vapor diffusion from film side X to film side Y is greater than the water vapor diffusion from film side Y to film side X, with the proviso that in the experimental set-up according to DIN EN ISO 12572:2001 condition B (85% RH to o% RH; 23°C), film side X is aligned with the side of higher relative air humidity, whereby a greater water vapor diffusion can be measured than when at the same measurement, film side Y faces the side of higher relative air humidity, and wherein the film is arranged within the closed space.

2. Use of a film for sealing a space closed by an outer skin in buildings, wherein the film comprises at least two layers, wherein one layer (layer 1) is humidity-variable and the quotient of water vapor diffusion resistance from the $s_d$ value at 25% mean relative air humidity (according to DIN EN ISO 12572:2001 condition A / Dry Cup) to the $s_d$ value at 71.5% mean relative air humidity (according to DIN EN ISO 12572:2001 condition C / Wet Cup) is greater than 3, and the other layer (layer 2) is essentially humidity-invariable and the quotient of the $s_d$ value at 25% mean relative air humidity (according to DIN EN ISO 12572:2001 condition A / Dry Cup) to the $s_d$ value at 71.5% mean relative air humidity (according to DIN EN ISO 12572:2001 condition C / Wet Cup) is less than 1.5, wherein the film is arranged such that layer 1 is aligned with the outer skin, and wherein the film is arranged within the closed space.

3. Use according to claim 1 or 2, wherein the layer 1 is aligned with film side X, or the outer side of the layer 1 forms film side X.

4. Use according to one of claims 1 to 3, wherein the film is a vapor barrier.

5. Use according to one of claims 1 to 3, wherein the outer skin is formed by wall structures, floor structures and/or ceiling structures in buildings.

6. Use according to one of claims 2 to 5, wherein the film comprises the layer 1, the layer 2 and at least one further layer, in particular for increasing the mechanical strength and/or water storage.

7. Use according to one of claims 1 to 6, wherein the total thickness of the film lies in the range of 20 $\mu$m to 700 $\mu$m, preferably from 60 $\mu$m to 600 $\mu$m.

8. Use according to one of claims 2 to 7, wherein the layer 1 has a thickness in the range of 10 $\mu$m to 200 $\mu$m, preferably between 30 $\mu$m and 200 $\mu$m, and/or the layer 2 has a thickness in the range of 10 $\mu$m to 350 $\mu$m, preferably between 25 $\mu$m and 350 $\mu$m.

9. Use according to one of claims 2 to 8, wherein the material for the layer 1 is selected from the group consisting of polyamide, ionomers, polyvinyl alcohols, ethylene vinyl alcohol, hydrolyzed vinyl acetates, blends of ethylene vinyl alcohol, polyvinyl alcohol or hydrolyzed vinyl acetates, and blends of ionomers with polyester, ethylene vinyl acetate, polyethylene, polypropylene or thermoplastic polyurethanes.

10. Use according to one of claims 2 to 9, wherein the material for the layer 2 is selected from the group consisting of polyester, thermoplastic ether-ester copolymers (TPEE), polyolefins, polyethylenes, high density polyethylene (HDPE), polypropylene (PP), ethylene vinyl acetate (EVA), polylactides, starch-based polymers, polyacrylates, thermoplastic polyurethanes (TPU), and combinations thereof.

11. Use according to one of claims 2 to 10, wherein, for the layer 1, the quotient for the water vapor diffusion resistance of the $s_d$ value at 25% mean relative air humidity to the $s_d$ value at 71.5% mean relative air humidity is greater than 4, preferably greater than 5, and/or the layer 2 at 71.5% relative air humidity has an $s_d$ value in the range of 1 m to 20 m, preferably of 1 m to 15 m.

12. Use according to one of claims 2 to 11, wherein the layer 2 is formed as a foil or film.

13. Use according to one of claims 1 to 12, wherein the outer skin comprises a roof, ceiling, wall or floor construction.

14. Use according to one of claims 1 to 13, wherein the outer skin comprises steel and/or wood and, optionally, insulating elements.

15. Method for sealing a space closed by an outer skin in buildings, wherein a film having a film side X and an opposite film side Y is arranged such that the film side X is aligned with the outer skin, wherein the film sides X and Y are defined such that the water vapor diffusion from film side X to film side Y is greater than the water vapor diffusion from film side Y to film side X, with the proviso that in the experimental set-up according to DIN EN ISO 12572:2001 condition B (85% RH to 0% RH; 23°C), film side X faces the side of higher relative air humidity, whereby a greater water vapor diffusion can be measured than when, at the same measurement, film side Y faces the side of higher relative air humidity, and wherein the film is arranged within the closed space.

16. Method for sealing a space closed by an outer skin in buildings, wherein a film comprising at least two layers, wherein one layer (layer 1) is humidity-variable and the quotient for water vapor diffusion resistance of the $s_d$ value at 25% mean relative air humidity (according to DIN EN ISO 12572:2001 condition A / Dry Cup) to the $s_d$ value at 71.5% mean relative air humidity (according to DIN EN ISO 12572:2001 condition C / Wet Cup) is greater than 3, and the other layer (layer 2) is essentially humidity-invariable and the quotient of the $s_d$ value at 25% mean relative air humidity (according to DIN EN ISO 12572:2001 condition A / Dry Cup) to the $s_d$ value at 71.5% mean relative air humidity (according to DIN EN ISO 12572:2001 condition C / Wet Cup) is less than 1.5, wherein the film is arranged such that the layer 1 is aligned with the outer skin, and wherein the film is arranged within the closed space.

17. Method according to claim 15 or 16, wherein the film and/or the outer skin are defined as in one of claims 3 to 14.

18. System, comprising a film as defined in one of claims 1 to 4 or 6 to 12, and an outer skin, as defined in one of claims 1, 5, 13 or 14.

19. Vapor barrier, comprising at least two layers, of which one layer (layer 1) is humidity-variable and the quotient for the water vapor diffusion resistance of the $s_d$ value at 25% mean relative air humidity to the $s_d$ value at 71.5% mean relative air humidity is greater than 3, and the other layer (layer 2) is essentially humidity-independent and the quotient for the water vapor diffusion resistance of the $s_d$ value at 25% mean relative air humidity to the $s_d$ value at 71.5% mean relative air humidity is less than 1.5, wherein the layer 2 has a thickness between 25 $\mu$m and 350 $\mu$m, with the proviso the layer has not a thickness of 25 $\mu$m.

20. Vapor barrier according to claim 19, wherein the layer 1 and the layer 2 together have a thickness in the range of 35 $\mu$m to 475 $\mu$m, or between 75 $\mu$m and 550 $\mu$m.

21. Vapor barrier according to claim 19 or 20, wherein the layer 1 has a thickness in the range of 10 $\mu$m to 200 $\mu$m, preferably between 30 $\mu$m and 200 $\mu$m.

22. Vapor barrier according to one of claims 19 to 21, wherein the layer 2 has a thickness in the range of 40 $\mu$m to 225 $\mu$m.

**23.** Vapor barrier according to one of claims 19 to 22, wherein the material for the layer 1 contains polyamide and/or ionomers.

**24.** Vapor barrier according to one of claims 19 to 23, wherein the material for the layer 2 is selected from the group consisting of polyester, thermoplastic ether-ester copolymers (TPEE), polyolefins, polyethylenes, high density polyethylene (HDPE), polypropylene (PP), ethylene vinyl acetate (EVA), polylactides, starch-based polymers, polyacrylates, thermoplastic polyurethanes (TPU), and combinations thereof.

**25.** Vapor barrier according to one of claims 19 to 24, wherein for the layer 1 the quotient for the water vapor diffusion resistance of the $s_d$ value at 25% mean relative air humidity to the $s_d$ value at 71.5% mean relative air humidity is greater than 4, preferably greater than 5.

**26.** Vapor barrier according to one of claims 19 to 25, wherein the layer 2 at 71.5% mean relative humidity has an $s_d$ value in the range of 1 m to 20 m, preferably of 1 m to 15 m.

**27.** Vapor barrier according to one of claims 19 to 26, wherein the layer 2 is formed as a foil or a film.

**28.** Vapor barrier according to one of claims 19 to 27, wherein the layers 1 and 2 are joined by bonding with adhesive, lamination, calendering or by coating one layer on the other.

**29.** Vapor barrier according to one of claims 19 to 27, wherein the layers 1 and 2 are prepared as a multilayer film.

**30.** Vapor barrier according to one of claims 19 to 29, comprising at least one further layer, in particular for increasing the mechanical strength and/or water storage.

**31.** Vapor barrier according to one of claims 19 to 30, wherein its total thickness lies in the range of 60 $\mu$m to 600 $\mu$m.

**32.** Use of a vapor barrier according to one of claims 19 to 31 for the sealing of building envelopes.

**33.** System comprising a vapor barrier according to one of claims 19 to 31 and a component to be sealed.

**Revendications**

**1.** Utilisation d'une feuille pour rendre étanche un espace fermé par une peau extérieure dans des bâtiments, la feuille présentant un côté de feuille X et un côté de feuille Y en regard et la feuille étant agencée de sorte que le côté de feuille W soit orienté vers la peau extérieure, les côtés de feuille X et Y étant définis de telle manière que la diffusion de barrière d'eau soit plus grande du côté de feuille X au côté de feuille Y que la diffusion de vapeur d'eau du côté de feuille Y au côté de feuille X à condition que le côté de feuille X soit dirigé pour la conception d'essai selon la norme DIN EN ISO 12572:2001 article B (85 % d'humidité relative à 0 % d'humidité relative ; 23°C) vers le côté de plus grande humidité d'air relative et une plus grande diffusion de vapeur d'eau peut être mesurée que lorsqu'en cas de mesure identique, le côté de feuille Y est dirigé vers le côté de plus grande humidité d'air relative, et la feuille étant agencée dans l'espace fermé.

**2.** Utilisation d'une feuille pour rendre étanche un espace fermé par une peau extérieure dans des bâtiments, la feuille comportant au moins deux couches, une couche (couche 1) étant à humidité variable et le quotient pour la résistance à la diffusion de vapeur d'eau de la valeur $s_d$ à 25 % d'humidité d'air relative moyenne (selon la norme DIN EN ISO 12572:2001 article A / Dry Cup) à la valeur $s_d$ à 71,5 % d'humidité d'air relative moyenne (selon la norme DIN EN ISO 12572:2001 article C / Wet Cup) étant supérieur à 3 et l'autre couche (couche 2) étant sensiblement à humidité variable et le quotient de la valeur $s_d$ à 25 % d'humidité d'air relative moyenne (selon la norme DIN EN ISO 12572:2001 article A / Dry Cup) à la valeur $s_d$ à 71,5 % d'humidité d'air relative moyenne (selon la norme DIN EN ISO 12572:2001 article C / Wet Cup) étant inférieur à 1,5, la feuille étant agencée de sorte que la couche 1 soit orientée vers la peau extérieure et la feuille, et la feuille étant agencée dans l'espace fermé.

**3.** Utilisation selon la revendication 1 ou 2, la couche 1 étant orientée vers le côté de feuille X ou le côté extérieur de la couche 1 formant le côté de feuille X.

**4.** Utilisation selon l'une quelconque des revendications 1 à 3, la feuille étant un pare-vapeur.

**5.** Utilisation selon l'une quelconque des revendications 1 à 3, la peau extérieure étant formée par des constructions de paroi, des constructions de sol et/ou des constructions de plafond dans des bâtiments.

**6.** Utilisation selon l'une quelconque des revendications 2 à 5, la feuille comportant la couche 1, la couche 2 et au moins une autre couche, en particulier pour l'augmentation de la résistance mécanique et/ou du stockage d'eau.

**7.** Utilisation selon l'une quelconque des revendications 1 à 6, l'épaisseur entière de la feuille se trouvant dans la plage de 20 à 700 $\mu$m, de préférence de 60 à 600 $\mu$m.

**8.** Utilisation selon l'une quelconque des revendications 2 à 7, la couche 1 présentant une épaisseur dans la plage de 10 à 200 $\mu$m, de préférence entre 30 et 200 $\mu$m et/ou la couche 2 présentant une épaisseur dans la plage de 10 à 350 $\mu$m, de préférence entre 25 et 350 $\mu$m.

**9.** Utilisation selon l'une quelconque des revendications 2 à 8, le matériau pour la couche 1 étant sélectionné dans le groupe parmi le polyamide, les ionomères, les alcools de polyvinyle, l'alcool d'éthylène vinyle, l'acétate de vinyle hydrolysé, des mélanges d'alcool d'éthylène vinyle, d'alcool de polyvinyle ou d'acétates de vinyle hydrolysés, et des mélanges d'ionomères avec du polyester, de l'acétate d'éthylène vinyle, du polyéthylène, du polypropylène ou des polyuréthanes thermoplastiques.

**10.** Utilisation selon l'une quelconque des revendications 2 à 9, le matériau pour la couche 2 étant sélectionné dans le groupe parmi le polyester, les copolymères d'éther-ester thermoplastiques (TPEE), les polyoléfines, les polyéthylènes, le polyéthylène de haute densité (HDPE), le polypropylène (PP), l'éthylène-acétate de vinyle (EVA), les polylactides, les polymères à base d'amidon, des polyacrylates, des polyuréthanes thermoplastiques (TPU) et des combinaisons de ceux-ci.

**11.** Utilisation selon l'une quelconque des revendications 2 à 10, pour la couche 1 le quotient pour la résistance de diffusion de vapeur d'eau de la valeur $s_d$ à 25 % d'humidité d'air relative moyenne à la valeur $s_d$ à 71,5 % d'humidité d'air relative moyenne étant supérieur à 4, de préférence supérieur à 5, et/ou la couche 2 présentant à 71,5 % d'humidité d'air relative moyenne une valeur $s_d$ dans la plage de 1 à 20 m, de préférence de 1 à 15 m.

**12.** Utilisation selon l'une quelconque des revendications 2 à 11, la couche 2 étant réalisée en tant que feuille ou film.

**13.** Utilisation selon l'une quelconque des revendications 1 à 12, la peau extérieure comportant une construction de toit, plafond, paroi ou sol.

**14.** Utilisation selon l'une quelconque des revendications 1 à 13, la peau extérieure comportant de l'acier et/ou du bois, et contenant éventuellement des éléments isolants.

**15.** Procédé pour rendre étanche un espace fermé par une peau extérieure dans des bâtiments, une feuille étant agencée avec un côté de feuille X et un côté de feuille Y en regard de telle manière que le côté de feuille X soit orienté vers la peau extérieure, les côtés de feuille X et Y étant définis de telle manière que la diffusion de vapeur d'eau soit plus grande du côté de feuille X au côté de feuille Y que la diffusion de vapeur d'eau du côté de feuille Y au côté de feuille X à condition que le côté de feuille X soit dirigé pour la conception d'essai selon la norme DIN EN ISO 12572:2001 article B (85 % d'humidité relative à 0 % d'humidité relative ; 23°C) vers le côté de plus grande humidité d'air relative et une plus grande diffusion de vapeur d'eau peut être mesurée que lorsqu'en cas de mesure identique, le côté de feuille Y est dirigé vers le côté de plus grande humidité d'air relative, et la feuille étant agencée dans l'espace fermé.

**16.** Procédé pour rendre étanche un espace fermé par une peau extérieure dans des bâtiments, une feuille qui comporte au moins deux couches, une couche (couche 1) étant à humidité variable et le quotient pour la résistance à la diffusion de vapeur d'eau est supérieur à 3 de la valeur $s_d$ à 25 % d'humidité d'air relative moyenne (selon la norme DIN EN ISO 12572:2001 article A / Dry Cup) à la valeur $s_d$ à 71,5 % d'humidité d'air relative moyenne (selon la norme DIN EN ISO 12572:2001 article C / Wet Cup) et l'autre couche (couche 2) est sensiblement à humidité variable et le quotient de la valeur $s_d$ à 25 % d'humidité d'air relative moyenne (selon la norme DIN EN ISO 12572:2001 article C / Dry Cup) à la valeur $s_d$ à 71,5 % d'humidité d'air relative moyenne (selon la norme DIN EN ISO 12572:2001 article C / Wet Cup) est inférieur à 1,5, étant agencée de sorte que la couche 1 soit orientée vers la peau extérieure, et la feuille étant agencée dans l'espace fermé.

**17.** Procédé selon la revendication 15 ou 16, la feuille et/ou la peau extérieure étant définie comme dans l'une des revendications 3 à 14.

**18.** Système comprenant une feuille comme définie dans l'une quelconque des revendications 1 à 4 ou 6 à 12 et une peau extérieure comme définie dans l'une des revendications 1, 5, 13 ou 14.

**19.** Pare-vapeur qui comporte au moins deux couches, une couche (couche 1) étant à humidité variable et le quotient pour la résistance à la diffusion de vapeur d'eau de la valeur $s_d$ à 25 % d'humidité d'air relative moyenne à la valeur $s_d$ à 71,5 % d'humidité d'air relative moyenne étant supérieur à 3, et l'autre couche (couche 2) étant sensiblement indépendante de l'humidité et le quotient pour la résistance à la diffusion de vapeur d'eau de la valeur $s_d$ à 25 % d'humidité d'air relative moyenne à la valeur $s_d$ à 71,5 % d'humidité d'air relative moyenne étant inférieur à 1,5, la couche 2 présentant une épaisseur entre 25 et 350 $\mu$m à condition que la couche ne présente pas une épaisseur de 25 $\mu$m.

**20.** Pare-vapeur selon la revendication 19, la couche 1 et la couche 2 présentant ensemble une épaisseur dans la plage de 35 à 475 pm ou entre 75 et 550 $\mu$m.

**21.** Pare-vapeur selon la revendication 19 ou 20, la couche 1 présentant une épaisseur dans la plage de 10 à 200 $\mu$m, de préférence entre 30 et 200 $\mu$m.

**22.** Pare-vapeur selon l'une quelconque des revendications 19 à 21, la couche 2 présentant une épaisseur dans la plage de 40 à 225 $\mu$m.

**23.** Pare-vapeur selon l'une quelconque des revendications 19 à 22, le matériau pour la couche 1 contenant du polyamide et/ou des ionomères.

**24.** Pare-vapeur selon l'une quelconque des revendications 19 à 23, le matériau pour la couche 2 étant sélectionné dans le groupe parmi le polyester, les copolymères d'éther-ester thermoplastiques (TPEE), les polyoléfines, les polyéthylènes, le polyéthylène de haute densité (HDPE), le polypropylène (PP), l'éthylène-acétate de vinyle (EVA), les polylactides, les polymères à base d'amidon, les polyacrylates, les polyuréthanes thermoplastiques (TPU) et des combinaisons de ceux-ci.

**25.** Pare-vapeur selon l'une quelconque des revendications 19 à 24, pour la couche 1 le quotient pour la résistance de diffusion à la vapeur d'eau de la valeur $s_d$ à 25 % d'humidité d'air relative moyenne à la valeur $s_d$ à 71,5 % d'humidité d'air relative moyenne étant supérieur à 4, de préférence supérieur à 5.

**26.** Pare-vapeur selon l'une quelconque des revendications 19 à 25, la couche 2 présentant à 71,5 % d'humidité d'air relative moyenne une valeur $s_d$ dans la plage de 1 à 20 m, de préférence de 1 à 15 m.

**27.** Pare-vapeur selon l'une quelconque des revendications 19 à 26, la couche 2 étant réalisée en tant que feuille ou film.

**28.** Pare-vapeur selon l'une quelconque des revendications 19 à 27, les couches 1 et 2 étant reliées entre elles par collage avec de la colle, par contre-collage, par calandrage ou par revêtement d'une couche sur l'autre.

**29.** Pare-vapeur selon l'une quelconque des revendications 19 à 27, les couches 1 et 2 étant fabriquées comme feuille à multiples couches.

**30.** Pare-vapeur selon l'une quelconque des revendications 19 à 29, comprenant au moins une autre couche, en particulier pour l'augmentation de la résistance mécanique et/ou du stockage d'eau.

**31.** Pare-vapeur selon l'une quelconque des revendications 19 à 30, son épaisseur globale étant dans la plage de 60 à 600 $\mu$m.

**32.** Utilisation d'un pare-vapeur selon l'une quelconque des revendications 19 à 31, pour rendre étanche des enveloppes de bâtiment.

**33.** Système, comprenant un pare-vapeur selon l'une quelconque des revendications 19 à 31 et un composant à rendre étanche.

**Fig. 1**

(1)     $s_d$ (groß)

① ②

0 % r.F.                                        85 % r.F.

$\longleftarrow$

(2)     $s_d$ (klein)

① ②

85 % r.F.                                        0 % r.F.

$\longrightarrow$

$$\Delta = \frac{s_d \, (\text{groß})}{s_d \, (\text{klein})}$$

**Fig. 2**

**Fig. 3(a)**

**Fig. 3(b)**

**Fig. 4**

**Fig. 5**

**Fig. 6(a)**

**Fig. 6(b)**

**Fig. 7**

**Fig. 8**

Fig. 9

Fig. 10

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

**Fig. 24**

**Fig. 25**

**EP 2 951 014 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10111319 A1
- EP 1372956 B1
- DE 19857483 A1
- DE 19902102 A1
- DE 19944819 A1
- AT 009694 U2
- EP 0821755 A1
- DE 20214762 U1
- US 20070015424 A1
- US 20100203790 A1
- EP 2554758 A1
- WO 2009065853 A1
- DE 102006018351 B4